# EUROPEAN PATENT SPECIFICATION

(11) **EP 2 046 880 B1**
(45) Date of publication and mention of the grant of the patent: **25.11.2020**
(21) Application number: 07813051.5
(22) Date of filing: 18.07.2007
(51) Int. Cl.: C08K 3/28, C09J 189/00

(54) **STABLE ADHESIVES FROM UREA-DENATURED SOY FLOUR**
STABILE HAFTMITTEL AUS HARNSTOFF-DENATURIERTEM SOJAMEHL
ADHÉSIFS STABLES À BASE DE FARINE DE SOJA DÉNATURÉE ET D'URÉE

(30) Priority: 18.07.2006 US 831650 P; 02.08.2006 US 835042 P
(43) Date of publication of application: 15.04.2009
(73) Proprietor: Solenis Technologies Cayman, L.P., 8200 Schaffhausen (CH)
(72) Inventor: WESCOTT, James, M., Waunakee, WI 53597 (US); BIRKELAND, Michael, J., Edgerton, WI 53534 (US)
(74) Representative: LKGlobal UK Ltd.
(86) International application number: PCT/US2007/073771
(87) International publication number: WO 2008/011455

(56) References cited:
- WO-A-00/08110
- WO-A-01/59026
- US-A- 2 848 342
- US-A1- 2005 222 358

## Description

### FIELD OF THE INVENTION

The invention relates generally to a method of producing stable soy/urea products (SUPs) and stable soy/urea products with dispersed or emulsified polymers (SUPDs) from urea-denatured soy flour.

### BACKGROUND

Adhesives derived from protein-containing soy flour first came into general use during the 1920's (U.S. Patents 1,813,387, 1,724,695 and 1,994,050). Soy flour suitable for use in adhesives was, and still is, obtained by removing some or most of the oil from the soybean, yielding a residual soy meal that was subsequently ground into extremely fine soy flour. Typically, hexane is used to extract the majority of the non-polar oils from the crushed soybeans, although extrusion/extraction methods are also suitable means of oil removal.

The resulting soy flour was then denatured (i.e., the secondary, tertiary and/or quaternary structures of the proteins were altered to expose additional polar functional groups capable of bonding) with an alkaline agent and, to some extent, hydrolyzed (i.e., the covalent bonds were broken) to yield adhesives for wood bonding under dry conditions. However, these early soybean adhesives exhibited poor water resistance, and their use was strictly limited to interior applications.

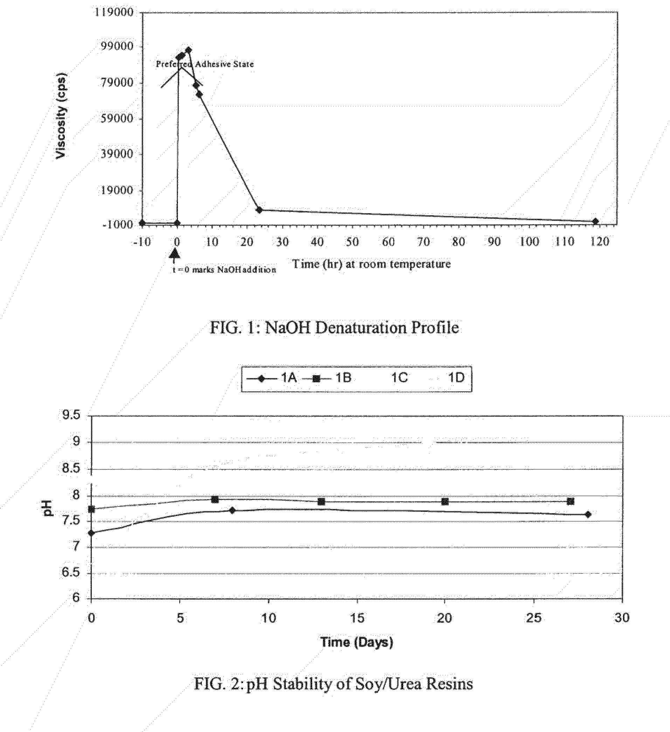

In addition, soybean adhesives exhibited a limited pot life. After only a few hours, the viscosity and performance of the alkaline-denatured soy flour mixture rapidly decreases (see FIG. 1). This reduction is believed to be a result of some hydrolysis of the soy flour and the excessive breakdown of the secondary, tertiary and quaternary structures deemed to be important for the formation of both strong adhesive and cohesive bonds. Thus, a balance of denaturing and retention of some secondary/tertiary/quaternary structure is likely essential to adhesive performance.

In the 1920's, phenol-formaldehyde (PF) and urea-formaldehyde (UF) adhesive resins were first developed. Phenol-formaldehyde and modified urea-formaldehyde resins were exterior-durable, but had high raw materials costs that initially limited their use. World War II contributed to the rapid development of these adhesives for water and weather resistant applications, including exterior applications. However, protein-based adhesives, mainly soy-based adhesives, continued to be used in many interior applications.

Emulsion polymers also became commonly used adhesives. Emulsion polymerization is used to produce high-volume polymers such as polyvinyl acetate (PVA), polychloroprene (PC), various acrylates and a variety of styrene-butadiene-acrylonitrile copolymer resins. Emulsion polymerization is also used to polymerize methyl mcthacrylatc, vinyl chloride, vinylidcnc chloride and styrcnc. In the past decade there has been a renewed interest in combining these emulsion polymers with soy-based adhesives due to the low cost of the soy-based adhesives and the need for formaldehyde-free adhesives for interior applications. Currently, interior plywood, medium-density fiberboard (MDF) and particleboard (PB) are primarily produced using urea-formaldehyde resins. Although very strong, fast curing, and reasonably easy to use, these resins lack hydrolytic stability along the polymer backbone. This causes large amounts of free formaldehyde to be released from the finished products (and ultimately, inhaled by the occupants within the home). There have been several legislative actions to push for the removal of these resins from interior home applications. (California Air Resource Board- CARB, 2007).

Soy-based adhesives can use soy flour, soy protein concentrates (SPC), or soy protein isolates (SPI) as the starting material. For simplicity, the present disclosure refers to all soy products that contain greater than 20% carbohydrates as "soy flour". Soy flour is less expensive than SPI, but soy flour often contains high levels of activated urease (an enzyme that decomposes urea into ammonia), thus requiring the urease to be denatured (destroyed) without compromising the viscosity/solids ratio or performance of the final product. Soy flour also contains high levels of carbohydrates, requiring more complex cross-linking techniques (as cross-linking these carbohydrates results in the much improved water resistance of the soy-based adhesives).

Carbohydrates exist in soy flour as both water-soluble and water-insoluble fractions. The insoluble carbohydrate is primarily hemicellulose with small amounts of cellulose. The soluble fraction consists mainly of sucrose, raffinose and stachyose. Thermal processing of soy flour can result in significant carbohydrate-protein reactions. These reactions vary and are often quite broadly summarized as simply Maillard type reactions.

SPC contains a greater amount of protein than soy flour, but lower amount than SPI. Typically, SPC is produced using an alcohol wash to remove the soluble carbohydrates.

SPI is typically produced via an isoelectric precipitation process. This process not only removes the soluble sugars but also the more soluble low molecular weight-proteins, leaving mainly high molecular weight-proteins that are optimal for adhesion even without modification. As a result, SPI makes a very strong adhesive with appreciable durability.
WO01/59026 discloses vegetable protein-based adhesive compositions and methods for preparing them. WO00/08110 discloses modified soy protein adhesives which have increased bonding abilities.
US2848342 discloses dry protein-containing mixtures.
US2005/222358 discloses water-resistant, protein based adhesive compositions and methods for preparing them.

### SUMMARY OF THE INVENTION

The present invention provides a method of making stable adhesives having improved wet and dry strengths. The method comprises heating soy flour until denatured and free of urease activity, and then adding urea to the denatured soy flour to form a stable soy flour-based adhesive, henceforth, referred to as the soy/urea product (SUP).

"Stable" is defined to mean an adhesive that remains viscous and pH-stable for at least several months. By "pH stable" we mean that the pH stays within one unit for at least 20 days. By "viscous stable" we mean that the Brookfield viscosity of the adhesive remains within 500 centipoises for at least 20 hours. "Substantially free" is defined herein to mean that conventional tests will not recognize any significant amounts of urease present in the soy flour, typically measured by a change in pH over time. Thus, soy flours that are "substantially free" of urease activity will exhibit a pH change of less than one unit over thirty days in the presence of urea at room temperature.

The soy flour is denatured by heating the soy flour in an aqueous solution to at least 40°C to 100°C for at least 15 to 500 minutes, and contains at least 20% carbohydrates. The denatured soy flour is not an alkaline-denatured soy flour.

The urea is added to the denatured soy flour while the soy flour is at these high temperatures, and is added to the soy flour in an amount equivalent to at most five parts urea to every one part soy flour. Preferably, at least 0.25 parts urea is added to every one part soy flour. In one embodiment one part urea is added to one part soy flour, while in an alternative embodiment two parts urea is added to one part soy flour producing the stable soy/urea product (SUP).

The method of the present invention also includes adding a cross-linking agent to the SUP. The cross-linking agent may be a formaldehyde-free cross-linking agent selected from polymeric methyl diphenyl diisocyanate (pMDI), amine epichlorihydrin adduct, epoxy, aldehyde or a urea aldehyde resin and any combination thereof. The cross-linking agent may also be a formaldehyde-containing cross-linking agent selected from formaldehyde, phenol formaldehyde, urea formaldehyde, melamine urea formaldehyde, phenol resorcinol and any combination thereof. The cross-linking agent is preferably added in an amount of at least 0.1 to 80 percent by weight basis. However, the SUP may also be added at small levels to extend the traditional adhesives for cost reduction.

The method of the present invention also includes adding a diluent to the SUP. The diluent may be reactive or non-reactive, and is selected from glycerol, ethylene glycol, propylene glycol, neopentyl glycol and polymeric versions thereof. The pH of the final adhesive may be adjusted using any traditional acid or base accordingly.

The present invention also provides a method of making a stable, aqueous adhesive dispersion or emulsion resin by the addition of the SUP to any emulsified or dispersed polymer to form a stable urea/soy product dispersion or emulsion (SUPD). The method comprises heating soy flouruntil denatured and free of urease, adding urea to form the SUP, and then combining with an emulsified or dispersed polymer to form a stable, soy/urea product dispersion or emulsion (SUPD).

The soy flour, which contains at least 20% carbohydrates, is denatured by heating an aqueous solution of soy flour to at least 40°C to 100°C for at least 15 to 500 minutes. The denatured soy flour is not an alkaline-denatured soy flour.

The urea can be added to the denatured soy flour while the flour is at 40°C to 100°C. The urea is added to the denatured soy flour in an amount equivalent to at most five parts urea to every one part soy flour and at least 0.25 parts urea to one part soy flour forming the SUP.

The SUP is added to an emulsified or dispersed polymers to yield a SUPD. Any emulsion or dispersion polymer can be modified by the SUP of the present invention, including polyvinyl acetate (PVA) or phenol formaldehyde dispersions (PFD).

The method may also include adding a cross-linking agent to the SUPD of the present invention. The cross-linking agent may be a formaldehyde-free cross-linking agent selected from polymeric methyl diphenyl diisocyanate (pMDI), amine epichlorihydrin adducts, epoxy, aldehyde or a urea aldehyde resin and any combination thereof. The cross-linking agent may also be a formaldehyde-containing cross-linking agent selected from formaldehyde, phenol formaldehyde, urea formaldehyde, melamine urea formaldehyde, phenol resorcinol and any combination thereof. The cross-linking agent is preferably added in an amount of at least 0.1 to 80 percent by weight basis.

The method of the present invention may also include adding a spray- or freeze-drying step to produce a powder adhesive.

U.S. Patent Appn. No. 2004-0089418 to Li et al. (Li) describes soy protein cross-linked with a polyamide-amine epichlorihydrin-derived resin (PAE). Li describes these particular PAEs, which are known wet strength additives for paper and wood, in many possible reactions with protein functional groups. In Li, SPI is denatured with alkali at warm temperatures and then combined with a suitable PAE resin to yield a water-resistant bond. This aqueous soy solution must be prepared just prior to copolymerization (or freeze-dried) to allow for a suitable pot life. In the present invention, modifying soy flour (containing both protein and carbohydrates) by adding urea yields an unexpected increase in stability, most notably improved compatibility, at comparable soy/PAE ratios with no noticeable decrease in dry or wet strength of the cured resin.

Further, Li does not teach using soy carbohydrate with PAE. Li teaches the use of SPI, which makes the denaturing process less important, since the protein already has an extensive thermal history. In contrast, regular baker-grade soy flour does not offer any appreciable adhesive capabilities unless a denaturing step and cross-linking agent are used. Li does not teach this.

U.S. Patent No. 6,497,760 to Sun et al. (Sun) uses SPI as a starting material to form adhesives. Sun teaches that the soy flour can be modified, but not with urea. Urea is a known denaturant for adhesives having little to no urease activity, such as SPI. However, urea is not known as an effective denaturant for soy flours containing moderate to high levels of urease activity. While it is known that SPI can be denatured with urea (Kinsella, J. Am. Oil Chem. Soc., March 1979, 56:244), Sun teaches away from using urea with soy flour because of the urease activity. However, the present invention demonstrates that urea can, in fact, be used very effectively to denature and solvate soy flour with, typically, less urea and at temperatures higher than previously employed in the art.

In the present invention, urea has been employed to solvate and denature the soy protein, thereby making the desired functional groups more accessible for adhesion and cross-linking. Cross-linking agents such as AE and PAE (broadly defined as amine-epichlorohydrin adducts and polyamine-epichlorohydrin adducts), polyisocyanates, epoxides and formaldehyde resins are commonly used in the art today. However, the stable, urea-denatured, soy flour-based product (SUP) of the present invention also offers improved compatibility and stability both with and without the addition of a suitable cross-linking agent, as well as a much improved resistance to biological attack.

In fact, all of the stable urea-denatured soy flour-based adhesive products (SUPs) of the present invention offer improved resistance to biological attack for at least several months, which is very unexpected for a soy protein in a water environment. Further, this feature is not dependent on the type of soy flour used. Soy flours with high or low protein dispensability indexes (PDI), or high or low protein contents, all showed this same effect as long as the urease activity had been significantly reduced.

The improved methods provides several advantages over the prior art. First, the SUP/SUPD of the present invention has much lower viscosities than other soy-based adhesives, which allows for easy transfer and applications. Second, the SUP/SUPD of the present invention has a much higher resistance to biological degradation. Third, the SUP/SUPD of the present invention has much higher percent solids. Fourth, SUP/SUPD of the present invention is more reactive toward, and demonstrates a superior shelf life with, certain cross-linking agents. Finally, the SUP/SUPD exhibits superior biological resistance without the use of additional biocides.

### BRIEF DESCRIPTION OF THE FIGURES

FIG. 1 illustrates the denaturation profile of soy flour with NaOH;
FIG. 2 illustrates the pH stability of soy/urea products over time;
FIG. 3 illustrates the viscosity stability of soy/ureaproducts overtime;
FIG. 4 illustrates the viscosity stability of soy/urea (1:1) products with 5% and 20% PAE over time;
FIG. 5 illustrates the ABES strength development for soy/urea (1:1) products (pH 4.5) with 5% and 20% PAE over time;
FIG. 6 illustrates the ABES strength development for soy/urea (1:1) products (pH 7.0) with 5% and 20% PAE over time;
FIG. 7 illustrates the ABES strength development for soy/urea (1:1) products (pH 10.0) with 5% and 20% PAE over time;
FIG. 8 illustrates the ABES strength development for soy/urea (1:1) products (pH 4.7 and 7.0) with 5% PAE over time;
FIG. 9 illustrates the ABES/Instron dry and wet strength for soy/urea/PAE products;
FIG. 10 illustrates the ABES/Instron wet strength retention;
FIG. 11 illustrates the ABES strength development for soy/urea (1:1) products (pH 7.0) with pMDI over time;
FIG. 12 illustrates the ABES strength development comparison for 20% pMDI and PAE;
FIG. 13 illustrates the ABES/Instron wet strength improvement with the addition of 5% PAE to soy products having various protein content.
FIG. 14 illustrates the viscosity and pH stability of PVA/soy/urea resins;
FIG. 15 illustrates the ABES/Instron Dry/Wet Shear Strength of PVA/soy/urea resins;
FIG. 16 illustrates the ABES/Instron Dry/Wet Shear Strength of PVA/Soy/Urea Resins (solids normalized);
FIG. 17 illustrates the ABES/Instron Dry/Wet Shear Strength of PVA/Soy/Urea Resins (low urease soy);
FIG. 18 illustrates the ABES/Instron Dry/Wet Shear Strength of PVA/Soy/Urea Resins (all 75% PVA);
FIG. 19 illustrates the Hot Press 3-Ply Shear Strengths (Wet/Dry) of PVA/Soy/Urea Resins (Maple);
FIG. 20 illustrates the Cold Press 3-Ply Shear Strengths (Wet/Dry) of PVA/Soy/Urea Resins (Maple);
FIG. 21 illustrates the ABES/Instron Dry/Wet Shear Strength of Cross-linker Modified PVA/Soy/Urea Resins (all 75% PVA); and
FIG. 22 illustrates the ABES/Instron Analysis of Soy/Urea/PF Dispersions.

### DETAILED DESCRIPTION OF THE INVENTION

Soy flour, when properly denatured, is an excellent adhesive. Once denatured, proteins contained within the soy flour "uncoil" from their native structure, thereby exposing the more hydrophilic amide groups of the protein backbone. Controlling the extent of denaturing is critical to producing an adhesive with increased strength and stability.

When soy flour is heated in an aqueous solution to at least 40°C -100°C, for a period of at least 15-500 minutes, a soy flour solution that is both heat-denatured and substantially free of significant amounts of urease results. In one version, a high urease-containing flour is heated at 90°C for 60 minutes, while a low urease-containing flour is heated at 50°C for 60 minutes. While heating the soy flour until denatured is absolutely essential, the time at high temperature required to denature the soy flour depends on the amount of denaturation and/or modification required. The time required to denature the soy flour also depends on the type of cross-linking agent chosen (if desired) to introduce additional water resistance.

Unfortunately, heat-denatured soy flour exhibits very high viscosities and low solids contents, making it difficult to transport and store, and will begin to degrade or "spoil" within a few hours. However, adding urea to this heat-denatured, substantially urease-free soy flour to produce the stable urea/soy product (SUP) not only reduces the viscosity but also, quite unexpectedly, greatly improves the biological resistance of the aqueous product. Further, the viscosity and pH stability of the SUP are greatly improved over traditional soy adhesives, even when a cross-linking agent is added. Adding urea is critical for viscosity control, compatibility, stability and solvation (which increases the reactivity toward suitable cross-linking agents) of the adhesive, but this can only be added if the flour is first heat denatured to reduce the urease activity.

The urea content may be adjusted to control the flow characteristics or glass transition temperature, T_{g}, of the final adhesive resin. This allows the SUP or SUPD to be spray dried and converted into a useable powder adhesive resin. In addition, urea inclusion unexpectedly provides improved biological resistance and both viscosity and pH stability even when combined with certain cross-linking agents. Biological resistance is defined to mean a lack of mold growth and/or a lack of decomposition resulting in a foul smelling product.

Typically, urea is charged to the substantially urease-free, heat-denatured soy flour while at temperatures ranging from 40°C -100°C. In one version, the urea was added at temperatures ranging from 75-90°C for high urease-containing flours and 45 -55°C for low urease-containing flours. The for about 15-500 minutes to produce the SUP.

Urea can serve a number of purposes in these products, including solvation, chemical reaction, denaturation and biological resistance. The extent of each of these contributions is unknown, but it is likely that all four occur at varying levels. The amount of urea added to the heat-denatured soy flour can be from five parts urea to one part soy flour (s/s) to 0.25 parts urea to one part soy flour (s/s); most preferably between two parts urea to one part soy flour to 0.5 parts urea to one part soy flour. The urea level may be adjusted to control the flow characteristics or T_{g} of the adhesive, making this technology capable ofbeing spray/freeze dried and converted into a useable powder adhesive.

Adding urea at high temperatures allows for low viscosity mixing and also allows the urea to react with the soy flour components, allowing, for example, carbamylation of the soy flour proteins (Stark G.R. et al., J. Biological Chemistry 235(11): 3177-3181 Nov. 1960). For soy flours having low levels of urease activity, the process can be simplified to a one-step process wherein the urea and soy are combined at room temperature and then heated to the desired temperature range. However, flours having higher protein levels and higher levels of urease activity offer betteradhesive performance.
In some applications, it may be desirable to add a diluent or caustic agent to provide viscosity, tack or some other favorable condition depending on the application and/or the cross-linker. However, adding too much caustic agent to the adhesive can destroy the residual tertiary/quaternary structure in soy protein and can lead rapidly to ammonia off-gassing and ultimately decreased performance of the adhesive. The pH of these adhesives is preferably less than ten, and in one version the pH is between five and ten to achieve optimum stability and compatibility. However, for certain SUPD systems the pH may be less than 5.

The SUP of the present invention can be added to any emulsion or dispersion polymers, such as, for example, polyvinyl acetate (PVA) emulsions and phenol formaldehyde dispersions (PFD) to yield a stable SUPD. Typically, adding unmodified soy flour or NaOH-denatured soy flour directly to emulsified polymers leads to resins having poor stability and compatibility.

Adding the SUP of the present invention to emulsion or dispersed polymers is accomplished by simple blending techniques capable in many commercial mix tanks, thin tanks or reactors. The temperature of the blend is not considered to be critical and room temperature is typically employed, although it may be desirable and acceptable to combine SUP with the emulsion or dispersed polymer at higher temperatures. The adjustment of the final pH with acids or bases may be required to ensure optimal stability of the SUPD; however, these adjustments are typically quite modest and are more for the stability of the emulsion or dispersion than they are for the soy/urea component.

The SUP or SUPD of the present invention may be used as is or can be further improved by adding a suitable cross-linking agent(s). The type and amount of cross-linking agent may depend on the amount of carbohydrates in the soy flour. For instance, the amount of carbohydrates in the flour can range from 1-60%, depending on the pretreatment of the soy flour. Some flours i.e. soy protein concentrates-SPC) typically have 15-30% carbohydrates, while other soy flours can have 40-50% carbohydrates. In one version, the soy flour contains 20% carbohydrates. As carbohydrates are the main cause for poor water resistance within soy flour, cross-linking these carbohydrates results in adhesives having improved strengths (dry and wet). Additionally, cross-linking carbohydrates results in adhesives having less water uptake and swelling (which can lead to the wet de-bonding of the adhesives).

The cross-linking agent may or may not contain formaldehyde. Although formaldehyde-free cross-linking agents are highly desirable in many interior applications, formaldehyde-containing cross-linking agents are also suitable for some exterior applications. Possible formaldehyde-free cross-linking agents for use with the adhesives of the present invention include isocyanates such as polymeric methyl diphenyl diisocyanate (pMDI), amine-epichlorihydrin resin, epoxy, aldehyde and urea-aldehyde resins capable of reacting with soy flour. Amine-epichlorohydrin resins are defined as those prepared through the reaction of epichlorohydrin with amine-functional compounds. Among these are polyamidoamine-epichlorohydrin resins (PAE resins), polyalkylenepolyamine-epichlorohydrin (PAPAE resins) and amine polymer-epichlorohydrin resins (APE resins). The PAE resins include secondary amine-based azetidinium-functional PAE resins such as Kymene™ 557H, Kymene™ 557LX, Kymene™ 617, Kymene™ 624 and ChemVisions™ CA1000, all available from Hercules Incorporated, Wilmington DE, tertiary amine polyamide-based epoxide-functional resins and tertiary amine polyamidourylene-based epoxide-functional PAE resins such as Kymene™ 450, available from Hercules Incorporated, Wilmington DE. A suitable cross-linking PAPAE resin is Kymene™ 736, available from Hercules Incorporated, Wilmington DE. Kymene™ 2064 is an APE resin that is also available from Hercules Incorporated, Wilmington DE. These are widely used commercial materials. Their chemistry is described in the following reference: H. H. Espy, "Alkaline-Curing Polymeric Amine-Epichlorohydrin Resins", in Wet Strength Resins and Their Application, L. L. Chan, Ed., TAPPI Press, Atlanta GA, pp. 13-44 (1994). It is also possible to use low molecular weight amine-epichlorohydrin condensates as described in Coscia (U.S. Patent No. 3,494,775) as formaldehyde-free cross-linkers. Possible formaldehyde-containing cross-linking agents include formaldehyde, phenol formaldehyde, urea formaldehyde, melamine urea formaldehyde, phenol resorcinol and any combination thereof.

The role of the cross-linking agent, regardless of type, is to incorporate an increase in the crosslink density within the adhesive itself, increasing the Tg and decreasing solubility, thereby resulting in better dry and wet strength. This is best achieved with cross-linking agents that have several reactive sites per molecule. For instance, in one embodiment the formaldehyde-free cross-linking agents comprises PAE in amounts ranging from 0.1 to 80%, and the formaldehyde-containing cross-linking agents comprises phenol formaldehyde in amounts ranging from 1 to 90%.

The cross-linking agent is typically added to the SUP or SUPD just prior to the application of the adhesive, but may be added days or even weeks prior in some situations. The shelf life of the final adhesive is dependent upon both the denaturing conditions and the type and amount of cross-linking agent, but can be in excess of several days. Therefore, greatly improved viscosity stability is achieved using the method of the present invention as compared to alkali denatured products (see FIG. 1). For instance, conventional alkali-denatured adhesives typically are only suitable for a few hours even without the addition of a cross-linking agent due to excessive denaturation and/or destructive hydrolysis concurrent with the rapid loss of tertiary/quaternary protein structure that is essential for good protein adhesive strengths.

In addition to a cross-linker, a number of reactive or non-reactive diluents may be added to the SUP/SUPD adhesives of the present invention. Such diluents may serve to better solvate, further denature or otherwise modify the physical properties of the soy/urea adhesive. Possible diluents include polyols such as glycerol, ethylene glycol, propylene glycol or any other hydroxyl-containing monomer or polymeric material available, defoamers, wetting agents and the like that are commonly employed in the art. These diluents/additives may be incorporated at levels ranging from 0.1 to upwards of 70% of the total adhesive. These diluents/modifiers may be incorporated during any step of the process including before, during or after the urease deactivation heating step.

The adhesive of the present invention can be applied to a suitable substrate in amounts ranging from 1 to 25% by weight, preferably in the range of 1 to 10% by weight and most preferably in the range of 2 to 8% by weight. Examples of some suitable substrates include, but are not limited to, a lignocellulosic material, pulp or glass fiber. The adhesive can be applied by any means known to the art including roller coating, knife coating, extrusion, curtain coating, foam coaters and spray coaters such as a spinning disk resin applicator.

Using adhesives to prepare lignocellulosic composites is taught in "Wood-based Composite Products and Panel Products", Chapter 10 of Wood Handbook - Wood as an Engineering Material, Gen. Tech. Rep. FPL-GTR-113, 463 pages, U.S. Department of Agriculture, Forest Service, Forest Products Laboratory, Madison, WI (1999). A number of materials can be prepared using the adhesive of the invention including particleboard, oriented strand board (OSB), waferboard, fiberboard (including medium-density and high-density fiberboard), parallel strand lumber (PSL), laminated strand lumber (LSL) and other similar products. Lignocellulosic materials such as wood, wood pulp, straw (including rice, wheat or barley), flax, hemp and bagasse can be used in making thermoset products from the invention. The lignocellulosic product is typically made by blending the adhesive with a substrate in the form of powders, particles, fibers, chips, flakes fibers, wafers, trim, shavings, sawdust, straw, stalks or shives and then pressing and heating the resulting combination to obtain the cured material. The moisture content of the lignocellulosic material should be in the range of 2 to 20% before blending with the adhesive composition. The adhesive compositions also may be used to produce plywood or laminated veneer lumber (LVL). The adhesive composition may be applied onto veneer surfaces by roll coating, knife coating, curtain coating, or spraying. A plurality of veneers are then laid-up to form sheets of required thickness. The mats or sheets are then placed in a heated press (e.g., a platen) and compressed to effect consolidation and curing of the materials into a board. Fiberboard may be made by the wet felted/wet pressed method, the dry felted/dry pressed method, or the wet felted/dry pressed method.

In addition to lignocellulosic substrates, the adhesive can be used with substrates such as glass wool, glass fiber and other inorganic materials. The adhesive of the present invention can also be used with combinations of lignocellulosic and inorganic substrates.

The following characteristics of the soy flour/urea adhesives were evaluated:
1) Physical Properties- Brookfield viscosity (LVT @ 30 and 60 RPMs with spindles 1-4 depending upon the viscosity of the product, oven solids (150°C/1hr or 125°C/1.5hr, this does result in some loss of free urea and thus explains why the theoretical values are higher than the measure values), pH, and room temperature viscosity and biological stability (as determined by the obvious onset of the soy rotting or spoiling similar to milk) are the main characteristics that we are concerned with.
2) Dry strength development- Shear strength of two plys pressed using the Automated Bonding Evaluation System (ABES) from AES, Inc. This is used for determining the strength of the adhesive bond as developed over time under specific pressing times/temperatures. 120°C was used in all examples. The results are plotted relative to press time to determine the relative strength development of different adhesives as a function of time. Specimens are prepared in accordance with the HRT ABES/Instron Procedure but tested within the ABES unit itself within seconds after pressing.
3) Wet strength retention- Wet failure often occurs when the glue line is not capable of properly distributing the stresses that build within the wood-glue interface as a result of expansion and contraction of the wood during the wetting and drying processes. Wet strength retention is calculated as a the percent of dry strength retained after soaking.
4) Interior Plywood Qualification- Samples are prepared using the Douglas Fir 3-Ply Procedure outlined below and then subjected to ANSI/HPVA HP-1-2004 4.6 "Three-cycle Soak Test" standard for interior grade plywood.

### HRT ABES/Instron Procedure.

Sample Preparation: Wood samples were stamped out using the Automated Bonding Evaluation System (ABES) stamping apparatus from Eastern White Pine veneer such that the final dimensions were 11.7 cm along the grain, 2.0 cm perpendicular to the grain and 0.08 cm thick. The adhesive to be tested was applied to one end of the sample such that the entire overlap area is covered, generally being in the range of 3.8 - 4.2 mg/cm² on a wet basis. The sample was then bonded to a second veneer (open time of less than 15 seconds to ensure excellent transfer) and placed in the ABES unit such that the overlap area of the bonded samples was 1.0 cm by 2.0 cm. Unless otherwise noted, all samples were pressed for 2.0 minutes at 120°C, with 9.1 kg/cm² of pressure. All bonded samples were then allowed to condition for at least 48 hours in a controlled environment at 22 °C and 50% relative humidity.

Strength Testing: For each resin, ten samples were prepared in the manner described above. After conditioning, five of the ten samples were tested using an Instron 1000 with a crosshead speed of 10mm/min. Maximum load upon sample breakage was recorded. These were termed the dry strength samples. The remaining five samples were placed in a water bath at 22°C for four hours. The samples were removed from the water bath and immediately tested in the manner described above. These samples were termed the wet samples. Special grips were manufactured to allow for the thin samples to be held within the Instron. For each resin, the value reported is an average of the five samples. The error reported is the standard deviation. Typical coefficients of variations (COVs) for this method are around 15% for both dry and wet evaluations; this is considered to be excellent in light of the variability within the wood itself.

### Douglas Fir 3-Ply Preparation Procedure

Sample Preparation: Veneers used were 8" by 8" and 1/6" thick Douglas fir. The adhesive to be tested was first applied to one side of the center veneer. The top veneer is then placed over this side such that the grain of the two veneers is perpendicular. There is no specific open time for this process. The adhesive is then applied to the other side of the center veneer and the bottom veneer is placed over this side such that the grain of the two veneers is perpendicular. Typical adhesive loads range from 21.5 to 22.5 mg/cm² per glue line on a wet basis. The assembled three-ply is then pressed for five minutes at 150°C with 11.0 kg/cm² of pressure. Samples are conditioned at 26°C and 30% relative humidity for at least 48 hours before testing.

Sample Testing: Samples were tested using ANSI/HPVA HP-1-2004 4.6 "Three-cycle Soak Test."

### Maple 3-Ply Preparation Procedure

Sample Preparation: Veneers used were 8" by 8" and 1/6" thick Maple veneers. The adhesive to be tested was first applied to one side of the center veneer. The bottom veneer is then placed over the adhesive applied side of the center veneer such that the grain of the two veneers is perpendicular. There is no specific open time for this process. This two-ply assembly is then turned over such that the center veneer is on top. The adhesive is then applied to the other side of the center veneer and the top veneer is placed over this side such that the grain of the two veneers is again perpendicular. Typical adhesive loads range from 21.5 to 22.5 mg/cm² per glue line on a wet basis. The assembled three-ply is then pressed for 5 minutes at 150°C with 11.0 kg/cm² of pressure. Samples are conditioned at 26°C and 30% relative humidity for at least 48 hours before testing.

Sample Testing: Samples were tested in accordance with ASTM D905

### Examples

The following examples set forth various aspects of the present invention. It is to be understood, however, that these examples are provided by way of illustration and nothing therein should be taken as a limitation upon the overall scope of the invention. Raw materials for these examples are as follows:

Soy Flour supplied by ADM (Decatur, IL) A7B grade, 4.7% moisture and Cargill (Minneapolis, MN) toasted soy (CG4); Soy Protein Concentrates (SPC) supplied by ADM (AVF); Soy Protein Isolates (SPI) supplied by ADM, SPI Profam 974; Urea (Commercial Grade) purchased from Univar; PAE, ChemVisions™ CA 1000 PAE, supplied by Hercules, pH 2.62, 150 C/1hr oven solids = 20.04%; pMDI, PAPI™, supplied by Dow Chemical (Midland, MI); PVA, DUR-A-FLEX™ supplied by Franklin, Int. of (Columbus, OH); epoxy resin ANCAREZ AR550, supplied by Air Products and Chemicals Inc. of Allentown, PA; and Arolon 850-W-45, supplied by Reichold of Bridgeport, NJ.

### Example 1

Soy flour was heat-denatured and then reacted with urea to produce stable soy/urea aqueous products (SUPs). The procedure for examples 1A and 1C is identical, differing only in the quantity of each raw material. Example 1D is similar to 1B, although different temperatures are used (D-50°C, B-90°C) and Example D also uses low urease toasted soy (CG4).

Preparation Procedure: Water was charged into a three-neck round bottom flask equipped with a heating mantle, temperature controller, reflux condenser and mechanical stirrer. The soy flour was added to the water at room temperature over a period of two to five minutes. The mixture was stirred for five minutes to homogeneity and then heated to 90°C over fifteen to thirty minutes. The reaction was held at 90°C ± 2°C for one hour with stirring at which time the urea was added to the urease free soy and the reaction was reheated to 90°C and held at 90°C ± 2°C with stirring for one hour. The reaction was cooled to 25°C on ice/water bath and stored for use in plastic bottles at room temperature.

**Table 1**

| Formula for Example 1A | | | | |
|---|---|---|---|---|
| Sequence | Ingredient | Amount (g) | Solids | % to Soy |
| 01 | Water | 636.1 | 0 | |
| 02 | Soy Flour-A7B | 150.0 | 143.0 | |
| 03 | Urea | 71.5 | 71.5 | 50 |
| Totals | | 857.6 | 214.5 | |
| % Solids | | | **25.0** | |

**Table 2**

| Formula for Example 1B | | | | |
|---|---|---|---|---|
| Sequence | Ingredient | Amount (g) | Solids | % to Soy |
| 01 | Water | 660.3 | 0 | |
| 02 | Soy Flour-A7B | 150.0 | 143.0 | |
| 03 | Urea | 143.0 | 143.0 | 100 |
| Totals | | 953.3 | 286.0 | |
| % Solids | | | **30.0** | |

**Table 3**

| Formula for Example 1C | | | | |
|---|---|---|---|---|
| Sequence | Ingredient | Amount (g) | Solids | % to Soy |
| 01 | Water | 526.3 | 0 | |
| 02 | Soy Flour-A7B | 100.0 | 95.3 | |
| 03 | Urea | 190.6 | 190.6 | 200 |
| Totals | | 816.9 | 285.9 | |
| % Solids | | | **35.0** | |

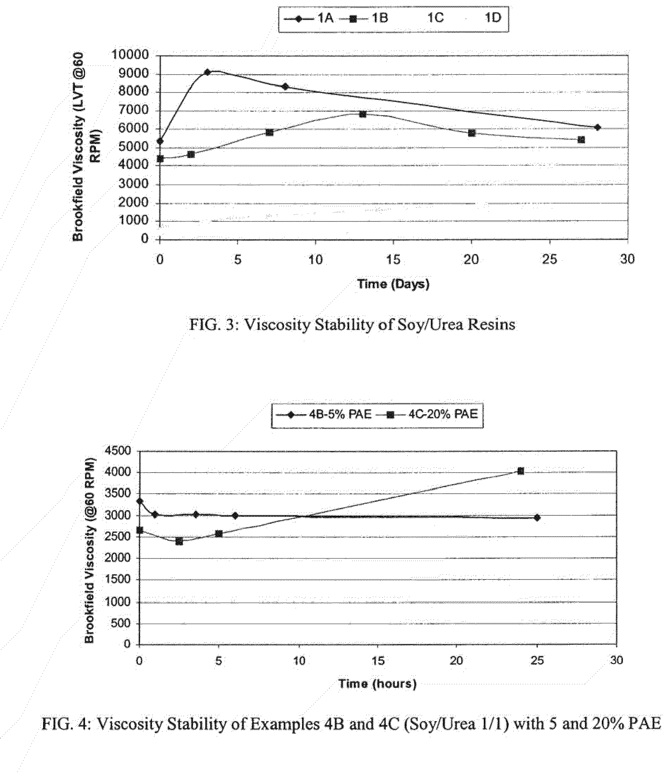

Discussion: The products from Examples 1A-1D all resulted in very homogenous mixtures. Physical properties are shown in Table 4. As expected, the viscosity is greatly reduced and the solids increased at higher levels of urea. The small increase in pH could be the result of trace amounts of urease activity still present in the product causing the formation of ammonia, which elevates the pH, but no ammonia smell was observed in any of the samples even after three months. The pH and viscosity stabilities of these products (FIGS. 2 and 3, respectively) clearly show how the 90°C products offer excellent stability and are also suitable for transportation via traditional liquid pumping methodologies. Interestingly, the 50°C product is much thinner and offers much lower pH and viscosity stability than the 90°C counterpart, perhaps as a result of incomplete denaturing or lack of urea-soy reaction.

Moreover, Example 1D did not show the biological resistance of the other resins and began to "spoil" after less than three weeks, probably a result of a decreased urea level due to urease degradation (note large difference in theoretical versus actual solids and the presence of the ammonia odor). The shear thinning behavior of the products often makes it challenging to obtain a consistent viscosity reading and is a probable reason for some of the shapes observed in FIG. 3. This shear-thinning feature is observed by all aqueous soy protein containing products, but it is actually slightly lower than for typical alkaline denatured products and, also, seems to lesson slightly as a function of total urea content, which could aid in the application of these products. Most importantly, the products from Examples 1A-1C are still fluid and stable from biological degradation after more than three months of setting at room temperature. A simple heat-denatured soy flour (no urea but reacted at 90°C) results in non-flowing thick products at concentrations of less that 15% that show a great deal of biological degradation in as little as 24 hours. Thus, unexpectedly, the urea is also serving as an essential biocide/preservative in these products.

**Table 4**

| Characteristics of Soy/Urea Resins | | | | | | |
|---|---|---|---|---|---|---|
| | | Solids | | Brookfield Viscosity | | |
| Example | Soy/Urea | Theoretical | Oven | @ 60 RPM | @30 RPM | PH |
| 1A | 2/1 | 25.0 | 24.2 | 5340 | 7760 | 7.28 |
| 1B | 1/1 | 30.0 | 27.4 | 4380 | 6360 | 7.73 |
| 1C | 1/2 | 35.0 | 30.0 | 400 | 540 | 8.31 |
| ID | 1/1 | 30.0 | 22.9 | 670 | 924 | 6.70 |

| | | | | | | |
|---|---|---|---|---|---|---|
| 1D is at 50°C all others are 90°C | | | | | | |

### Example 2: COMPARATIVE EXAMPLES

Some recent work has demonstrated the known dry and wet adhesive strengths from non-cross-linked soy protein isolates. Comparing these adhesives to the adhesives of the present invention demonstrate the improvements that can be realized with a low cost, high carbohydrate containing soy flour.

Example 2A is a low temperature urea-denatured product prepared according to Sun except that 23.9% solids were used instead of 14.0%. Additionally, Sun's product was freeze-dried and the present product was used immediately.

Preparation Procedure: Water and urea were charged to a three-neck round bottom flask equipped with a heating mantle, temperature controller, reflux condenser and mechanical stirrer. The solution was heated to 25°C at which time the SPI was added over a fifteen min. period. The mixture was maintained at 25 ± 2°C for one hour with stirring. The reaction product was then stored for use at room temperature.

**Table 5**

| Formula for Example 2A | | | | |
|---|---|---|---|---|
| Sequence | Ingredient | Amount (g) | Solids | % to Soy |
| 01 | Water | 121.2 | 0 | |
| 02 | SPI | 10.0 | 9.44 | |
| 03 | Urea | 28.8 | 28.8 | 305 |
| Totals | | 160 | 38.2 | |
| % Solids | | | **23.9** | |

Example 2B is an alkali denatured soy product prepared according to Example 1.3 from Sun. These products were excellent comparative examples for the strength requirements for Douglas Fir interior plywood because these products are capable of passing an interior grade plywood test if unconventionally applied to both sides of the interior veneers. (ANSI/HPVA HP-1-2004 4.6 "Three-cycle Soak Test").

Preparation Procedure: Water was charged into a three-neck round bottom flask equipped with a heating mantle, temperature controller, reflux condenser and mechanical stirrer. The SPI was added over two to five minutes. The reaction was stirred for 30 minutes at 22°C. The 50% NaOH was then added and the reaction was heated to 50°C. The reaction was held at 50 ± 2°C for two hours with stirring. The reaction was cooled to 25°C and stored for use.

**Table 6**

| Formula for Example 2B | | | | |
|---|---|---|---|---|
| Sequence | Ingredient | Amount (g) | Solids | % to Soy |
| 01 | Water | 180.9 | 0 | |
| 02 | SPI | 30.0 | 28.32 | |
| 03 | 50% NaOH | 0.3 | 0.15 | 0.53 |
| Totals | | 211.2 | 28.5 | |
| % Solids | | | **13.5** | |

Discussion: The physical characteristics of these two products (Examples 2A and 2B) are shown in Table 7. These products are much thicker than the products shown in Table 4 at comparable solids. Most notably, the high urea Example 2A is twenty-five times as thick as the soy flour 0.5 S/U example; the comparative product also exhibits a lower percent solids (23.9 vs. 35.0). This high viscosity, low solids situation becomes even more of an issue with the alkali modified product (Example 2B). The present method produces soy flour/urea products that are much thinner and at higher solids than previous SPI resins can offer. These products were tested using both the HRT ABES/Instron Procedure and the Douglas Fir 3-Ply Preparation Procedure.

**Table 7**

| Characteristics of Soy Comparative Resins | | | | | | |
|---|---|---|---|---|---|---|
| | | Solids Brookfield Viscosity | | | | |
| Example | Soy/Urea | Theoretical | Oven | @ 60 RPM | @30 RPM | PH |
| 2A | 1/3 | 23.9 | 22.1 | 9810 | 15960 | 7.17 |
| 2B | NA | 13.5 | 14.1 | > 10,000 | >20,000 | 9.97 |

Soy Flour/Urea with PAE: Although the soy flour/urea adhesives can be used as a stand-alone adhesive, the water resistance is limited. A cross-linking agent may be added to provide additional protection against water swelling and, thus, enhancing the wet strength. The cross-linking agent introduces additional crosslink density into the products.

Examples 3-5 demonstrate the cross-linking ability of a typical PAE resin with a 1/1 soy flour/urea product (similar to example IB). Initial soy flour/urea pH levels of 4.5, 7.0 and 10.0 were selected to determine the pH effects on both final performance and neat product characteristics. PAE levels of 0, 5 and 20% (s/s) were evaluated for stability and performance.

### Example 3

Preparation Procedure: A product prepared according the procedure in 1B was charged to a three-neck round bottom flask equipped with a mechanical stirrer. The pH was lowered by adding 50% H₂SO₄ at room temperature with stirring. After the acid addition, the solution was stirred for fifteen minutes then stored for use at room temperature.

Example 3A was placed in a beaker and the required amount of PAE was added with stirring. Examples 3B and 3C were prepared using the identical procedure. The samples were vigorously stirred for one minute until homogeneous and then stored for use at room temperature.

**Table 8**

| Formula for Example 3A (pH 4.5, 0% PAE) | | | | |
|---|---|---|---|---|
| Sequence | Ingredient | Amount (g) | Solids | % to Soy/Urea |
| 01 | Like Example 1B | 200.0 | 60.0 | |
| 02 | 50% H₂SO₄ | 2.8 | 1.4 | 2.3 |
| Totals | | 202.8 | 61.4 | |
| % Solids | | | **30.3** | |

**Table 9**

| Formula for Example 3B (pH 4.5, 5% PAE) | | | | |
|---|---|---|---|---|
| Sequence | Ingredient | Amount (g) | Solids | % to Soy/Urea |
| 01 | 3A | 59.8 | 18.1 | |
| 02 | PAE | 4.5 | 0.90 | 5.0 |
| Totals | | 64.3 | 19.0 | |
| % Solids | | | **29.5** | |

**Table 10**

| Formula for Example 3C (pH 4.5, 20% PAE) | | | | |
|---|---|---|---|---|
| Sequence | Ingredient | Amount (g) | Solids | % to Soy/Urea |
| 01 | 3A | 46.2 | 14.0 | |
| 02 | PAE | 14.1 | 2.8 | 20.0 |
| Totals | | 60.3 | 16.8 | |
| % Solids | | | **27.9** | |

### Example 4

Examples 4A-C (0,5 and 20% PAE) were prepared in an identical procedure as used for Examples 3A-C, albeit with a slightly higher starting pH of the starting product 1B. The pH of Example 4A was lowered to only pH of 7.0 with 50% H₂SO₄.

### Reference Example 5 (not within the scope of the claims)

Examples 5A-C (0,5 and 20% PAE) were prepared in an identical procedure as used for examples 3A-C, albeit with a higher starting pH of the starting product 1B. The pH of Example 5A was increased to a pH of 10.0 with the addition of 50% NaOH. The characteristics of the nine products prepared in Examples 3-5 are shown in Table 11.

**Table 11**

| Characteristics of Soy/Urea Resins with PAE | | | | | | |
|---|---|---|---|---|---|---|
| | | Solids | | Brookfield Viscosity | | |
| Example | Description | Theoretical | Oven | @ 60 RPM | @30 RPM | pH |
| 3A | S/U 1:1 pH 4.5 | 30.3 | 24.2 | 666 | 892 | 4.63 |
| 3B | S/U 1:1 pH 4.5 5% PAE | 29.5 | 25.9 | 368 | 452 | 4.55 |
| 3C | S/U 1:1 pH 4.5 20% PAE | 27.9 | 25 | 330 | 352 | 4.18 |
| 4A | S/U 1:1 pH 7 | 30.1 | 23.7 | 3280 | 4560 | 7.14 |
| 4B | S/U 1:1 pH 7 5% PAE | 29.5 | 26.3 | 5980 | 8820 | 7.28 |
| 4C | S/U 1:1 pH 7 20% PAE | 27.9 | 24.7 | 4270 | 6080 | 7.33 |
| 5A | S/U 1:1 pH 10 | 30.3 | 26.6 | 3620 | 5140 | 10.01 |
| 5B | S/U 1:1 pH 10 5% PAE | 29.5 | 27.4 | 6940 | 10020 | 9.50 |
| 5C | S/U 1:1 pH 10 20% PAE | 27.8 | 26.1 | 4320 | 6080 | 7.00 |

The pH of the final product (after adding PAE) did not deviate too far from the starting pH of the soy flour/urea product, with the exception of the pH 10 products. In this case, the pH was very sensitive to PAE addition. Also, all of the pH 10 products immediately began to slightly off-gas ammonia due to destructive alkaline reactions. As such, the pH of the final composition may be modified after adding the PAE cross-linker.

All of the products in Table 11 offer appreciable viscosity stability for at least five hours, with several for greater than twenty hours to more than three days. FIG. 4 depicts the stability of products made according to Examples 4B and 4C. With 5% PAE added (Example 4B) the viscosity was essentially unchanged for more than twenty-four hours; demonstrating a one-component product is achievable. The initial decrease in viscosity observed in both products is due mainly to a foaming phenomenon that can be reduced/removed with the addition of certain anti-foam agents.

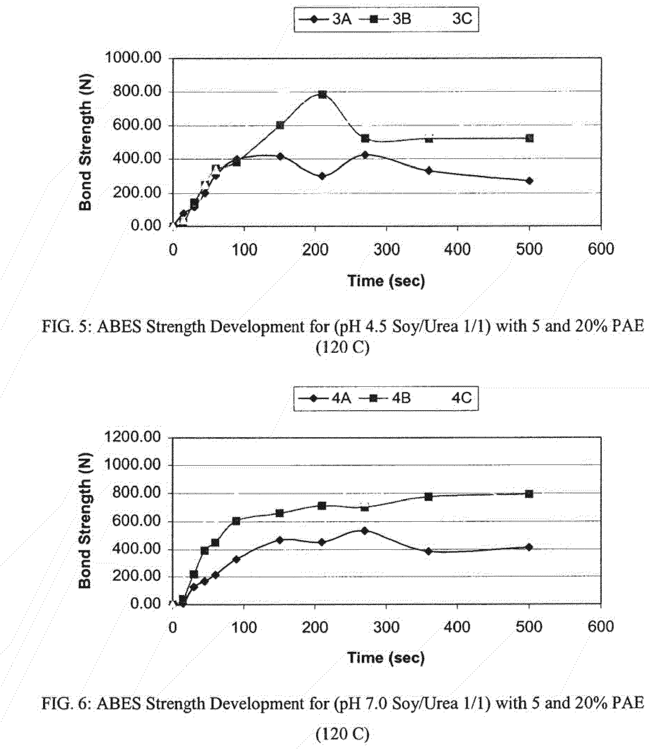

Both the ultimate strength of the product and the rate at which these strengths are developed is of much importance when determining commercial viability of any adhesive candidate. All of the products from Table 11 were evaluated using the Strength Development Procedure outlined earlier in this application. These results are shown in FIGS. 5-8. In all of the cases, there is a clear and consistent increase in the ultimate strength with the addition of the PAE cross-linking agent; although the 5% PAE actually provides a greater increase from 0% than the 20% does from 5%, suggesting that there may be an optimum level of PAE to incorporate into the system.

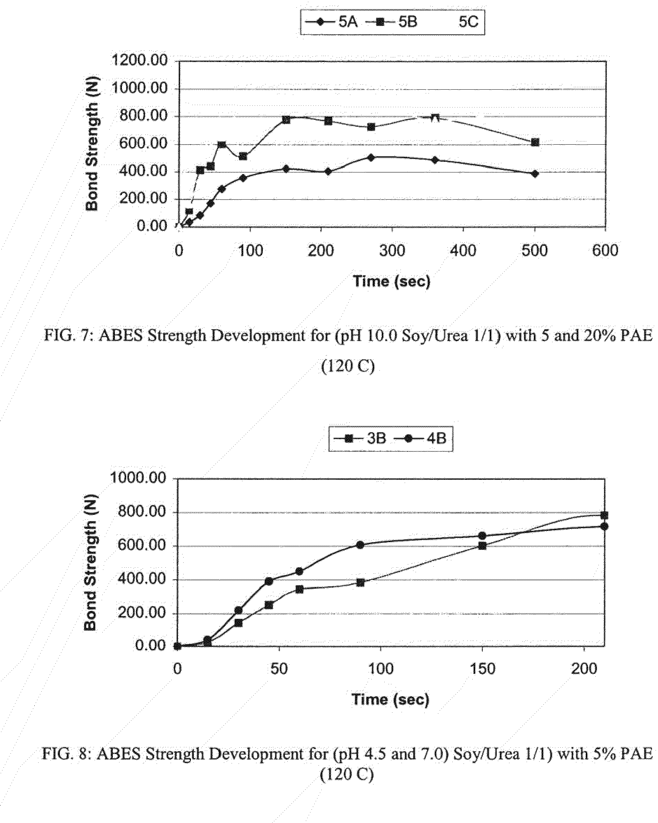

Both the pH 7.0 and the pH 10.0 samples (Example 4 and 5) also demonstrate a greater initial rate for strength development than the control 0% PAE resins; however, this phenomenon was not observed with the pH 4.5 samples, perhaps due to slower PAE reactions under these conditions. Also of interest was the fact that the 5% PAE products (Example 3B) seemed to exhibit a slower curing rate at pH 4.5. This may partially explain the poor wet strength of this specimen relative to the others (see FIG. 8). The HRT developed procedure (HRT ABES/Instron) was used to assess the dry and wet strength of the 9 adhesives in Table 11 (3A-C, 4-A-C and 5A-C) as well as the two comparative examples (Examples 2A-B).

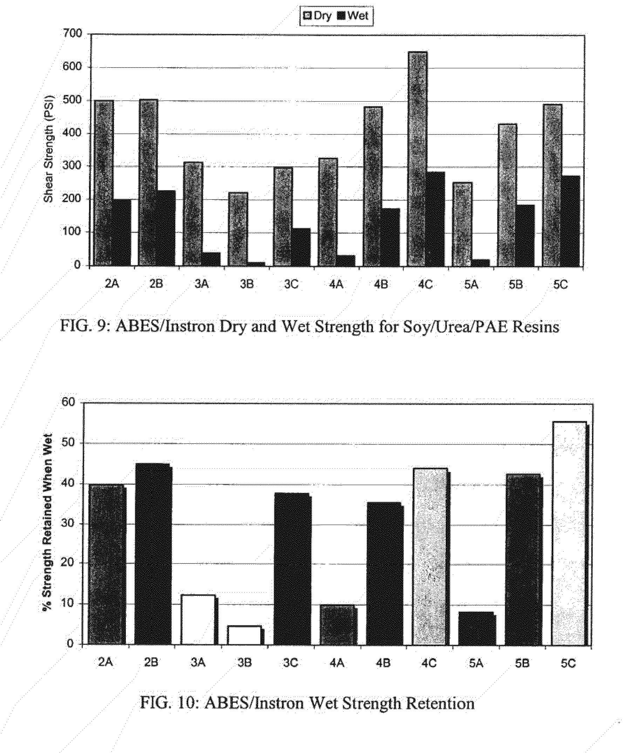

FIG. 9 illustrates the shear strength of the specimens tested dry and wet with the results shown side by side for comparison. FIG. 10 illustrates the percent retention of strength (100 Xwet/dry). Combined, the comparative SPI products clearly demonstrate the excellent dry and wet strengths capable with these resins without the inclusion of any cross-linking agents. The same cannot be said for the soy flour/urea products that require the addition of a suitable cross-linker to achieve appreciable dry and wet strengths.

However, products made at pH 4.5 do not follow this trend. In fact, the strongest dry strength at pH 4.5 was reported to be the product containing 0% PAE. The wet strength at this pH was improved by adding PAE but not at the levels observed for the higher pH samples. With the exclusion of the pH 4.5 data, adding 5% PAE increases the dry strength by an average of 58% and the wet strength by an average of 572%. Adding 20% PAE to the pH 7.0 and 10.0 products increases the dry strength by 97% and increases the wet strength by an incredible 952%.

If one compares Examples 2A and 4A, both composed of approximately 25% protein on a solids basis, the effect of the carbohydrates on the strength properties of flour vs. isolates can be fully appreciated. Adding 5% cross-linker in sample 4B essentially nullifies the effect of the carbohydrates by forming higher MW, less hygroscopic carbohydrate and protein polymers. Thus, cross-linking the carbohydrates is crucial to acquiring the wet strength in the soy flour.

### Example 6

In this example, pMDI is evaluated as a cross-linking agent for the soy flour/urea (1/1) product. Similar to the PAE examples, the effect of the cross-linker concentration was assessed. In this example, the pH of the starting 1/1 soy/urea product was 7.0 with pMDI levels of 5 and 20%. The process for preparing these products was identical to that used in Example 4.

**Table 12**

| Formula for Example 6A (pH 7.0, 5% pMDI) | | | | |
|---|---|---|---|---|
| Sequence | Ingredient | Amount (g) | Solids | % to Soy/Urea |
| 01 | Like Example 4A | 55.0 | 16.6 | |
| 02 | pMDI | 0.83 | 0.83 | 5.0 |
| Totals | | 55.83 | 17.43 | |
| % Solids | | | 31.2 | |

**Table 13**

| Formula for Example 6B (pH 7.0, 20% pMDI) | | | | |
|---|---|---|---|---|
| Sequence | Ingredient | Amount (g) | Solids | % to Soy/Urea |
| 01 | Like Example 4A | 53.4 | 16.1 | |
| 02 | pMDI | 3.2 | 3.2 | 19.9 |
| Totals | | 56.6 | 19.3 | |
| % Solids | | | **34.1** | |

**Table 14**

| Characteristics of Soy Flour/Urea pMDI Resins | | | | | | |
|---|---|---|---|---|---|---|
| | | Solids | | Brookfield Viscosity | | |
| Example | Description | Theoretical | Oven | @ 60 RPM | @30 RPM | pH |
| 6A | S/U 1:1 pH 7, 5% pMDI | 31.2 | 26.9 | 3360 | 4840 | 6.56 |
| 6B | S/U 1:1 pH 7, 20% pMDI | 34.1 | 29.5 | 3840 | 5480 | 6.55 |

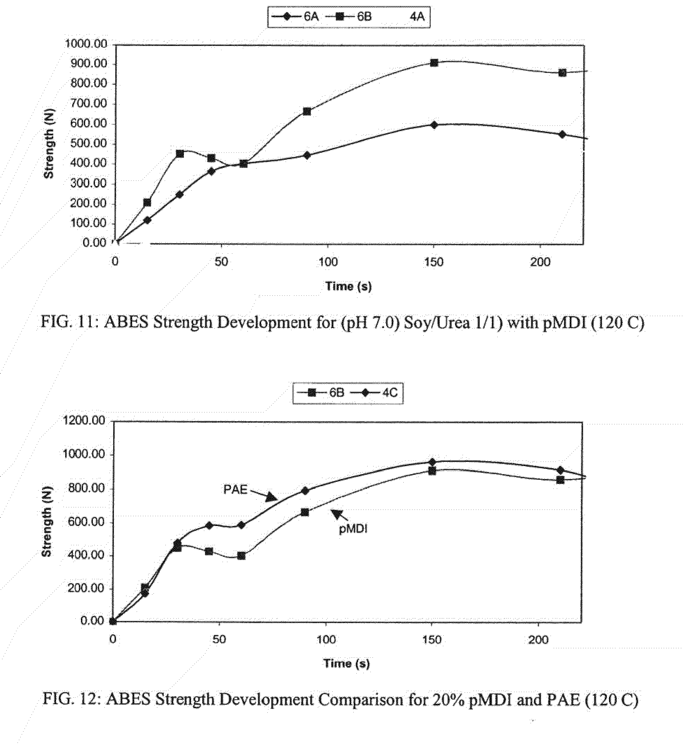

Discussion: The use of pMDI as a cross-linking agent was evaluated in a manner similar to that of the PAE modified products of Example 4. The characteristics of the soy four/urea/pMDI products are shown in Table 14; strength development curves are shown in FIG. 11. In general, pMDI products are slightly lower in viscosity (even at higher solids) than their PAE modified counterpart. Additionally, the pMDI products are slightly lower in pH. The strength development results show that the dry strengths are increased as a function of pMDI content. Additionally, the rate of strength development is also increased significantly with cross-linker incorporation (similar to that observed with the PAE modified resins). A direct comparison of the PAE vs. pMDI modified products, shown in FIG. 12, illustrates that both products perform comparably in terms of strength and nearly identically with respect to the rate of development. The results of the three-ply soak testing does suggest that urea may be interfering with the pMDI-soy reactions and, thus, it is best to use higher soy/urea ratios when employing pMDI as a cross-linking agent.

### Example 7

The criteria for interior plywood is the ANSI wet method for delamination. Although a wide range of products are bonded in this market, a large percentage is still prepared from Douglas Fir. In this example, several of the soy/urea adhesives were evaluated along with the adhesives from comparative Example 2. Specimens bonded with the soy flour/urea adhesives were prepared in accordance to the Douglas Fir three-Ply Preparation Procedure outlined above. The specimens bonded with Examples 2A and 2B were prepared differently (per Sun); by applying 7.5 g of wet adhesive to one side of each top and bottom ply and to both sides of the center ply. An open time of fifteen minutes was used before the boards were assembled with the grain of the center ply perpendicular to the grain of the top and bottom plys. The assembled three-ply was then pressed for fifteen minutes at 104°C with a pressure of 11.0 kg/cm². All of the panels were tested according to the ANSI/HPVA HP-1-2004 4.6 "Three-cycle Soak Test" standard. The results are shown in Table 15.

**Table 15**

| 3-Cycle Soak Results on 3-Ply Douglas Fir Plywood Samples | | |
|---|---|---|
| Adhesive | Pass/Fail | Comments |
| 2A | Passed | Adhesive to both sides with 15 minute open time |
| 2B | Passed | Adhesive to both sides with 15 minute open time |
| 4B | Failed | Failed after second soak |
| 4C | Passed | |
| 6A | Failed | Failed after first soak |
| 8D | Passed | |

### Example 8

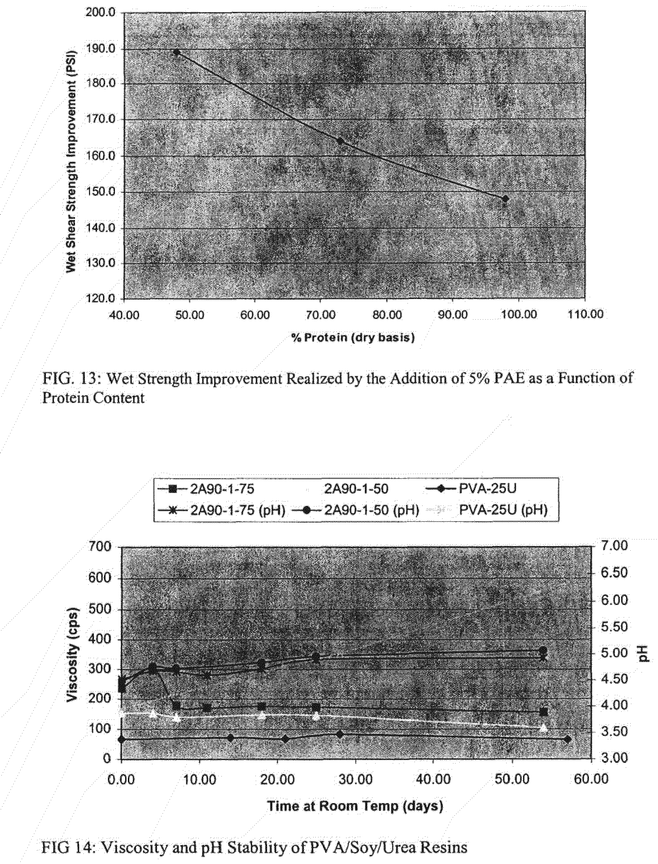

The effect of the protein content on the cross-linking with PAE was evaluated to demonstrate the importance of using a carbohydrate-containing soy product. In this example, three different soy/urea adhesives (having varying protein contents) were prepared in a manner as Example 1C. A soy/urea level of 1:2 was employed for all cases and 5% PAE was used as the cross-linking agent added in a similar manner as described in Example 4B. The characteristics of these adhesives are shown in Table 16. The wet strength of each of these adhesives was assessed using the ABES/Instron procedure outlined previously. The observed wet strength improvement over the non cross-linked resin is presented graphically in FIG. 13 as a function of protein content. Additionally, Example 8D was subjected to soaking conditions outlined in Example 7, and the specimen passed with a minimal amount of PAE (5%).

**Table 16**

| Characteristics of Soy/Urea (1/2) with 0 and 5% PAE as a Function of Protein Content | | | | | | | | | | | |
|---|---|---|---|---|---|---|---|---|---|---|---|
| | | | | | Brookfield Visc (LVT) | | | Shear Strength | | Shear Strength | |
| Example | Soy | % Protein | PAE % | (solids) | 60 RPM | 30 RPM | pH | Dry Ave | Wet Ave | Dry Stdev | Wet Stdev |
| 8A | A7B | 48 | 0 | (35.0) | 448 | 636 | 6.98 | 223.9 | 31.6 | 14.0 | 8.7 |
| 8B | A7B | 48 | 5 | (33.7) | 1216 | 1744 | 7.02 | 537.4 | 220.6 | 37.8 | 25.6 |
| 8C | AVF | 73 | 0 | (30.0) | 2680 | 3760 | 7.04 | 332.9 | 83.9 | 43.1 | 17.5 |
| 8D | AVF | 73 | 5 | (29.4) | 1850 | 2680 | 7.03 | 584.5 | 247.7 | 60.6 | 25.6 |
| 8E | SPI | 98 | 0 | (20.0) | 26.5 | 28 | 7.06 | 192.9 | 27.7 | 31.6 | 5.9 |
| 8F | SPI | 98 | 5 | (20.0) | 36 | 40 | 6.98 | 389.7 | 175.5 | 54.8 | 8.1 |
| | PAE Control | 0 | 100 | (20.7) | 113 | 111 | 7.08 | 399.4 | 263.9 | 35.4 | 37.9 |

Discussion- The results in FIG 13 clearly demonstrate that not only are the effects of the PAE cross-linking agent not diminished by the presence of the carbohydrates, but in fact, the effects are unexpectedly enhanced. Perhaps a result of the mainly PAE-PAE reactions occurring within these systems as demonstrated by the homo PAE adhesive strengths shown in Table 16. These results clearly show that the carbohydrate fractions are an essential part of the water resistance development that occurs within soy flour adhesives.

### Example 9

It may be desirable to use a non-reactive or reactive diluent to enhance either the wet or dry strength of the product either with or without a cross-linker. The samples were prepared as in Example 3 with the exception that glycerol was subsequently added to the mixture at 5, 25 or 100% ratio to the soy in the product. The results of this study are shown in Table 17.

**Table 17**

| Addition of Glycerol as a Diluent | | | | | | | | | | |
|---|---|---|---|---|---|---|---|---|---|---|
| | | | | | **Brookfield Visc LVT** | | **Sheer Strength** | | **Sheer Strength** | |
| **Example** | **Description** | **PAE%** | **Glycerol %** | **Solids** | **30 RPM** | **pH** | **Dry Ave** | **Wet ave** | **Dry Stdev** | **Wet Stdev** |
| 10A | S/U 1:2 | 10 | 0 | (36.7) | 236 | 5.68 | 810.0 | 247.6 | 202.4 | 73.9 |
| 10B | S/U 1:2 | 10 | 5 | (37.0) | 172 | 5.66 | 1054.2 | 454.6 | 147.0 | 116.9 |
| 10C | S/U 1:2 | 10 | 25 | (38.1) | 244 | 5.8 | 1052.4 | 261.9 | 96.0 | 82.8 |
| 10D | S/U 1:2 | 10 | 100 | (36.7) | 152 | 5.55 | 904.8 | 275.2 | 126.5 | 38.8 |

Discussion- The results from Table 17 show that either the dry or the wet strength can be significantly enhanced by the addition of a diluent. The increase could be attributed to a number of causes, but likely has to do with increased solubility or stabilization of the secondary/tertiary structure that is crucial to soy adhesives for maintaining strength, or from improved wetting of the substrate. Although Example 9 demonstrates the ability to introduce a diluent/modifier post heating, it is acceptable and, perhaps, preferable in certain situations to introduce the diluent/modifier prior to the urease deactivation step.

### Emulsion Control Examples

Commercial polyvinyl acetate (PVA) was used to compare the effects of adding the soy/urea resins on physical properties and panel performance. Table 10 defines the control samples evaluated.

**Table 10**

| Control Resins | | |
|---|---|---|
| Control | % PVA | Comments |
| C1 | 100 | Used as received 55.5% solids |
| C2 | 100 | Lower solids to match solids content of soy/urea modified resins |
| C3 | 75 | Addition of 25% of a 37% urea solution |

In Examples 10-20, soy flour was heat denatured and then reacted with ureato produce stable soy/urea aqueous resins. The process may either be a one-stage or a two-stage process.

### Example 10

In the first example, a one-stage process was employed using the formula shown in Table 2A.

**Table 11**

| Formula for Example 10. | | | | |
|---|---|---|---|---|
| Sequence | Ingredient | Amount (g) | Solids | Soy/Urea |
| 01 | Water | 192.0 | 0 | |
| 02 | Urea | 57.2 | 57.2 | 1.0 |
| 03 | Soy Flour-A7B | 60.0 | 57.2 | 1.0 |
| Totals | | 309.2 | 114.4 | |
| % Solids | | | **37.0** | |

Preparation Procedure: Water was charged into a three-neck round bottom flask equipped with a heating mantle, temperature controller, reflux condenser and mechanical stirrer. Urea was added to the water at room temperature and stirred over a period of two to five minutes until completely dissolved. Soy flour (A7B) was then charged over five minutes, at room temperature, to the rapidly stirring solution. The mixture was stirred for five minutes to homogeneity and then heated to 90°C over 15-30minutes. The reaction was held at 90 ± 2°C for one hour with stirring. The reaction was cooled to 25°C on ice/water bath and stored for use in plastic bottles at room temperature.

### Example 11

This example demonstrates the two-stage process to use with high urease soy flours are used.

**Table 12**

| Formula for Example 11 | | | | |
|---|---|---|---|---|
| Sequence | Ingredient | Amount (g) | Solids | % to Soy |
| 01 | Water | 703.0 | 0 | |
| 02 | Soy Flour-A7B | 160.0 | 152.5 | 1.0 |
| 03 | Urea | 152.5 | 152.5 | 1.0 |
| Totals | | 1015.5 | 305.0 | |
| % Solids | | | **30.0** | |

Preparation Procedure: Water was charged into a three-neck round bottom flask equipped with a heating mantle, temperature controller, reflux condenser and mechanical stirrer. The soy flour (A7B) was added to the water at room temperature over a period of 2- 5 minutes. The mixture was stirred for 5 minutes to homogeneity and then heated to 90°C over 15-30 minutes. The reaction was held at 90 ± 2°C for 1 hour with stirring at which time the urea was added and the reaction was reheated to 90 °C and held at 90 ± 2°C with stirring for 1 hour. The reaction was cooled to 25°C on ice/water bath and stored for use in plastic bottles at room temperature.

### Examples 12-18

Examples 12-18 follow either the one-stage or the two-stage processes outlined above in Examples 10 and 11, respectively. Variations demonstrated are soy/urea ratio and reaction temperature. See Table 13 attached for the detailed characteristics of these resins.

Soy/Urea/PVA Examples: To assess the ability of the soy/urea adhesives to function as co-adhesives or extenders with polyvinyl acetate (PVA), several soy/urea/PVA adhesive combinations were prepared using the following procedure.

Preparation Procedure: PVA was charged into a three-neck round bottom flask equipped with a mechanical stirrer and thermometer. The temperature was adjusted to 22-24°C using water baths. The soy/urea co-adhesive (selected from Examples 10-18) was added to the rapidly stirring PVA emulsion at room temperature over a period of 2- 5 minutes. The mixture was stirred for 15 minutes to ensure homogeneity. The pH of the mixture was measured and reported as "pH Initial". Sulfuric acid (50%) was then added drop-wise to lower the pH to a final value of 4.4-4.6. The amount of acid required to reduce the pH was reported as concentrated sulfuric acid to solution basis. These PVA/Soy/Urea adhesives were allowed to stir for an additional 15 minutes and then were stored for use in plastic bottles at room temperature.

Discussion. The excellent stabilities demonstrated for the soy/urea are also observed with the soy/urea/PVAc resins (FIG. 14). Notably, the pH stability of the soy/urea/PVA is much greater than that of the urea/PVAc control resin (Example C3). Further, the shear thinning behavior of the soy/urea is decreased and often times no longer observed at all in the soy/urea/PVA resins.

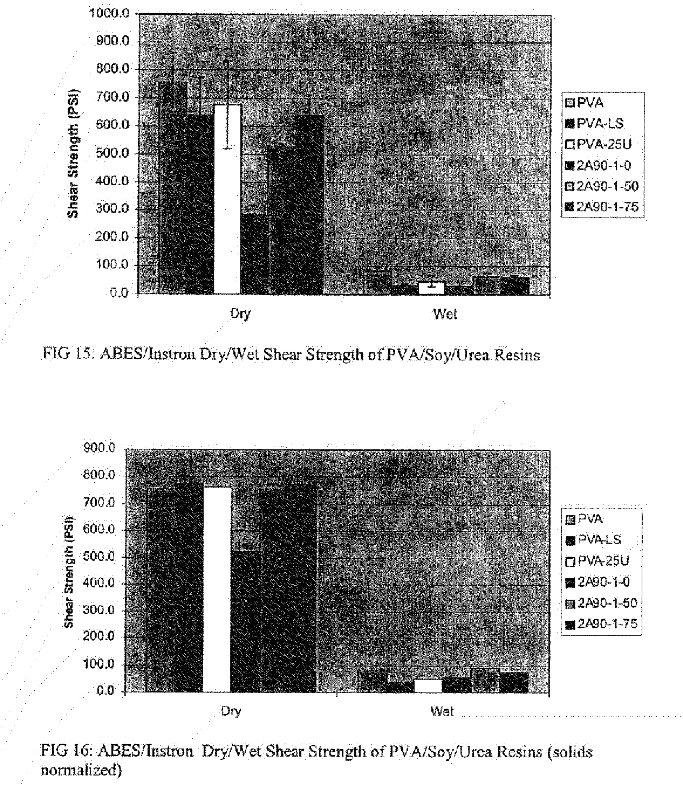

Performance Evaluation (ABES/Instron Method). PVA is not well known for its wet strength in typical PVA formulations. As shown in FIG. 15, the soy/urea resin is also not well suited for wet applications without the addition of a reactive cross-linking agent. However, 25-50% of the PVA can be replaced with soy/urea with minimal loss in dry strength even with lower percent solids.

FIG. 16 shows a percent solids normalized chart of FIG. 15, illustrating that there is no discernable decrease in dry or wet strength with even up to 50% Soy/Urea. Thus, the soy/urea adhesive when combined with PVA at 50% level is equal in strength on a solids basis with PVA. It should be noted that 50% urea modified PVA samples were prepared, but no samples could be prepared using a hot pressing procedure (120 C) as they all blew up coming out of the press. This is believed to be a result of the lowering of the T_{g} both the plasticizing urea. The T_{g} of soy is much higher and, thus, this was not an issue with the soy/urea resins.

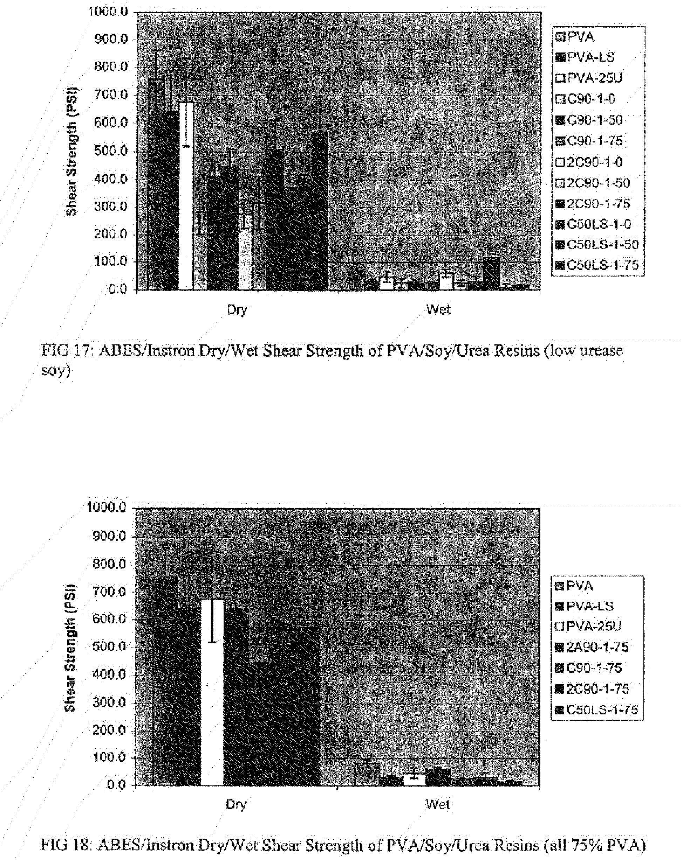

Using low-urease soy (toasted soy variety) enables a simple, one-stage approach. FIGs 17 and 18 demonstrate the effect of temperature and stages (one vs. two) on the soy/urea product. The results suggest that the toasted soy in all examples is slightly weaker in strength than the untoasted soy with higher PDI demonstrated above.

Within the toasted soy set itself, the lower temperature resins showed greater strengths, most notably showing a much improved wet strength (Example 15). This is also shown in the surprising wet strength of the three-ply samples using a low temperature, one-stage approach on the toasted flour.

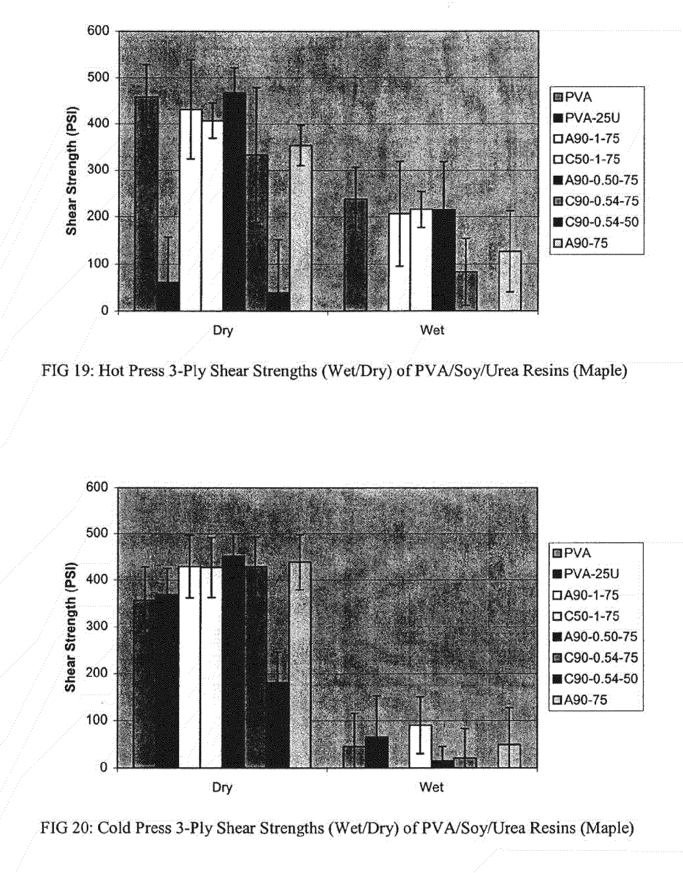

Evaluation Method (Maple 3-Ply). Shear blocks were prepared from 3-ply maple assemblies that were pressed under both room temperature (45 minute) conditions and 150 C (5 min) conditions. These results are graphically shown in FIGs 19 and 20 and tabulated in Table 15 attached. As expected, since the samples are much larger than those prepared on the ABES, the T_{g} depression as observed with urea addition is exacerbated to a point that even the 25% urea containing samples show some delamination immediately out of the hot press. These urea-modified samples do not possess enough strength while hot due to their low T_{g}. In general, this was not a problem with the soy/urea samples except with the 50% modified PVA, but in this example the soy/urea level was a very low 0.54, thus the amount of urea was simply too great and again T_{g} depression was likely the problem.

The cold pressed samples all demonstrate the ability of the soy/urea/PVA resins with 25% PVA substitution (75% PVA) to perform comparably in most of the samples. Surprisingly, in this study, the 50% PVA sample performed poorly, perhaps a result of the lower solids of this adhesive. Wood failures for all of these resins ranged from 0-60% within the entire data set with no obvious trending.

**Table 13**

| Characteristics of Soy/Urea/PVA Resins | | | | | | | | | | | | |
|---|---|---|---|---|---|---|---|---|---|---|---|---|
| | | | | | | | | | | | **Viscosity** | |
| Ex. # | Desc. | Soy Type | T (C) | S/U (s/s) | Stgs | % PVA | Theor. Solids | pH Ini | % Acid | pH F | LVT @ 60 RPM | LVT @ 30 RPM |
| C1 | PVA | | | | | 100 | | | | | | |
| C2 | PVA-LS | | | | | 100 | 45.8 | 4.06 | | | 320 | 328 |
| | 37U | | | | | 0 | 37.0 | | | 6.21 | | |
| C3 | PVA-25U | | | | | 75 | 49.4 | 3.95 | 0.00 | 3.95 | 66.5 | 64 |
| C4 | PVA-50U | | | | | 50 | 44.4 | 4.35 | 0.00 | 4.35 | NOT MEASURED | |
| 10 | A90-1-0 | A7B | 90 | 1.00 | 1 | 0 | 37.0 | | | 10.13 | 4050 | 5900 |
| 10-75 | A90-1-75 | | | | | 75 | 49.3 | 9.83 | 2.53 | 4.30 | 1102 | 1308 |
| 11 | 2A90-1-0 | A7B | 90 | 1.00 | 2 | 0 | 30.0 | | | 7.77 | 2590 | 3600 |
| 11-75 | 2A90-1-75 | | | | | 75 | 45.8 | 6.63 | 0.53 | 4.53 | 236 | 284 |
| 11-50 | 2A90-1-50 | | | | | 50 | 38.9 | 7.32 | 0.91 | 4.48 | 152 | 152 |
| 12 | C90-1-0 | CG4 | 90 | 1.00 | 1 | 0 | 30.0 | | | 8.21 | 2970 | 4260 |
| 12-75 | C90-1-75 | | | | | 75 | 45.8 | 7.05 | 0.61 | 4.52 | 274 | 316 |
| 12-50 | C90-1-50 | | | | | 50 | 38.9 | 7.79 | 1.01 | 4.49 | 260 | 334 |
| 13 | 2C90-1-0 | CG4 | 90 | 1.00 | 2 | 0 | 30.0 | | | 7.79 | 4600 | 6980 |
| 13-75 | 2C90-1-75 | | | | | 75 | 45.8 | 6.80 | 0.58 | 4.49 | 278 | 310 |
| 13-50 | 2C90-1-50 | | | | | 50 | 38.9 | 7.44 | 1.01 | 4.49 | 252 | 327 |
| 14 | C50-1-0 | CG4 | 50 | 1.00 | 1 | 0 | 37.0 | | | 6.91 | OFF | OFF |
| 14-75 | C50-1-75 | | | | | 75 | 49.3 | 6.06 | 0.50 | 4.44 | 498 | 508 |
| 15 | C50LS-1-0 | | | | | 0 | 30.0 | | | 6.75 | 894 | 1268 |
| 15-75 | C50LS-1-75 | | | | | 75 | 45.8 | 5.91 | 0.40 | 4.51 | 148 | 152 |
| 15-50 | C50LS-1-50 | | | | | 50 | 38.9 | 6.43 | 0.73 | 4.49 | 86 | 91 |
| 16 | A90-.050-0 | A7B | 90 | 0.50 | 1 | 0 | 37.0 | | | 9.76 | 251 | 336 |
| 16-75 | A90-0.50-75 | | | | | 75 | 49.3 | 9.41 | 1.80 | 3.68 | 466 | 532 |
| 17 | C90-0.54-0 | CG4 | 90 | 0.54 | 1 | 0 | 43.2 | | | 9.19 | 3280 | 4800 |
| 17-75 | C90-0.54-75 | | | | | 75 | 51.8 | 7.30 | 0.66 | 4.35 | 448 | 468 |
| 17-50 | C90-0.54-50 | | | | | 50 | 48.6 | 8.25 | 1.10 | 4.48 | 604 | 696 |
| 18 | A90-0 | A7B | 90 | no urea | 1 | 0 | 15.0 | | | 6.80 | 538 | 764 |
| 18-75 | A90-75 | | | | | 75 | 33.1 | 6.23 | 0.51 | 4.49 | 422 | 480 |

**Table 14**

| Shear Strength Evaluation of Soy/Urea/PVA Resins (ABES/Instron) | | | | | |
|---|---|---|---|---|---|
| | | ABES/Instron | | | |
| | | Dry | | Wet | |
| Example | Desc. | Strength (PSI) | StDev | Strength (PSI) | StDev |
| C1 | PVA | 756.1 | 105.0 | 82.6 | 12.8 |
| C2 | PVA-LS | 640.1 | 133.7 | 31.6 | 4.8 |
| | 37U | | | | |
| C3 | PVA-25U | 676.2 | 156.2 | 47.1 | 19.0 |
| C4 | PVA-50U | Delam | NA | Delam | NA |
| 10 | A90-1-0 | | | | |
| 10-75 | A90-1-75 | | | | |
| 11 | 2A90-1-0 | 283.4 | 32.5 | 29.5 | 17.7 |
| 11-75 | 2A90-1-75 | 638.2 | 73.2 | 62.7 | 6.1 |
| 11-50 | 2A90-1-50 | 528.7 | 8.3 | 64.5 | 11.6 |
| 12 | C90-1-0 | 242.1 | 40.6 | 25.2 | 15.9 |
| 12-75 | C90-1-75 | 446.3 | 65.9 | 25.2 | 2.7 |
| 12-50 | C90-1-50 | 414.1 | 50.0 | 29.7 | 9.8 |
| 13 | 2C90-1-0 | 276.3 | 53.4 | 60.0 | 13.0 |
| 13-75 | 2C90-1-75 | 508.1 | 103.7 | 30.3 | 18.5 |
| 13-50 | 2C90-1-50 | 317.5 | 96.5 | 24.5 | 11.3 |
| 14 | C50-1-0 | | | | |
| 14-75 | C50-1-75 | | | | |
| 15 | C50LS-1-0 | 371.6 | 26.2 | 116.8 | 14.3 |
| 15-75 | C50LS-1-75 | 571.2 | 124.5 | 16.1 | 4.0 |
| 15-50 | C50LS-1-50 | 402.5 | 17.0 | 10.3 | 10.0 |

**Table 15**

| Shear Strength Evaluation of Soy/Urea/PVA Resins (Maple 3-Ply) | | | | | | | | | |
|---|---|---|---|---|---|---|---|---|---|
| | | 3- PLY-5 min @ 150 C | | | | 3-PLY-45 min @ 23 C | | | |
| | | Dry | | Wet | | Dry | | Wet | |
| Example | Desc. | Strength (PSI) | StDev | Strength (PSI) | StDev | Strength (PSI) | StDev | Strength (PSI) | StDev |
| C1 | PVA | 458.8 | 68.9 | 237.5 | 69.3 | 357.1 | 70.7 | 45.5 | 70.1 |
| C3 | PVA-25U | 61.8 | 94.8 | 0.0 | 0.0 | 368.8 | 56.3 | 65.3 | 87.5 |
| 10-75 | A90-1-75 | 431.6 | 107.5 | 206.9 | 111.6 | 429.1 | 66.8 | 0.0 | 0.0 |
| 14-75 | C50-1-75 | 407.5 | 38.3 | 216.0 | 38.7 | 427.3 | 64.4 | 90.4 | 60.3 |
| 16-75 | A90-0.50-75 | 467.4 | 54.2 | 214.8 | 103.1 | 450.9 | 48.3 | 15.4 | 30.1 |
| 17-75 | C90-0.54-75 | 333.3 | 145.5 | 83.1 | 70.4 | 428.5 | 64.3 | 21.6 | 61.2 |
| 17-50 | C90-0.54-50 | 39.5 | 111.7 | 0.0 | 0.0 | 180.7 | 65.0 | 0.0 | 0.0 |
| 16-75 | A90-75 | 353.8 | 43.5 | 127.0 | 85.7 | 438.6 | 58.9 | 49.5 | 77.9 |

### Examples 19-27

Soy/urea/PVA 25/75 with added cross-linking agent. By adding the soy/urea adhesive to the PVA emulsion, functionality has been introduced to the resin chemistry. This added functionality can be used to introduce improved water resistance to PVA resins by adding a reactive cross-linking agent capable of reacting with the soy, the PVA or both. Four different reactive cross-linkers were added to the system at levels of 2.5 and 10% to soy/urea to assess their potential to impart wet strength to these stable, compatible emulsions.

Preparation Procedure: The soy/urea/PVA uncross-linked base resin was prepared identical to Example 11. The reactive cross-linking agents were added to the resin with rapid stirring. The reactive cross-linking agents evaluated were as follows: Example 19- No cross-linking agent, Example 20- 2.5% PAE, Example 21- 10.0% PAE, Example 22- 2.5% pMDI, Example 23- 10.0% pMDI, Example 24- 2.5% AR550, Example 25- 10.0% AR550, Example 26- 2.5% Arlon, Example 27- 10.0% Arlon.

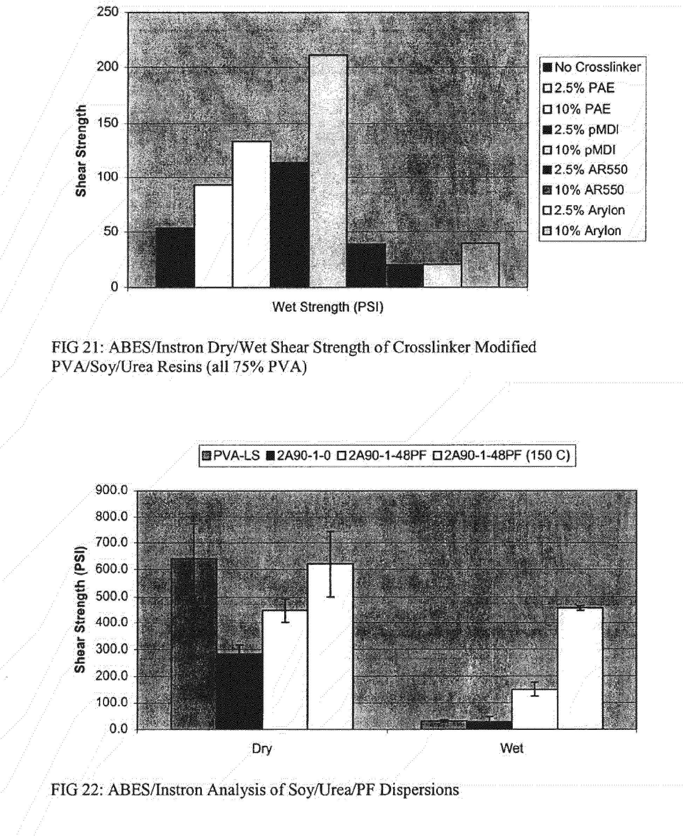

Discussion (Evaluation Method- ABES/Instron): Adding reactive cross-linkers improved the wet strength of the PVA-modified adhesives. For instance, adding AR550 and the Arlon showed no additional wet strength in the resins (FIG. 21)

### Example 28

Soy/Urea/PF dispersion: In addition to adding the soy/urea co-adhesive to PVA, it was also evaluated with a phenol formaldehyde (PF) dispersion.

**Table 16**

| Formula for Example 28 | | | | |
|---|---|---|---|---|
| Sequence | Ingredient | Amount (g) | Solids | % of Solids |
| 01 | PF Resin | 50.0 | 24.5 | 48 |
| 02 | Soy/Urea (Ex. 2A) | 87.1 | 26.1 | 52 |
| 03 | H₂SO₄ | 3.1 | 1.55 | |
| 04 | Soy/Urea (Ex. 2A) | 87.1 | 26.1 | 52 |
| Totals | | 140.7 | 52.6 | |
| % Solids | | | 37.4 | |

Preparation Procedure: A PF dispersion was prepared at room temperature in a 250 mL round bottom flask equipped only with an overhead stirrer. The PF resin (lab prepared F/P = 2.1, Na/P = 0.2) was charged to the flask along with the surfactant, all at room temperature. After stirring for 2-3 minutes, 2.2g H₂SO₄ was charged to the rapidly stirring PF solution. The PF resin inverted to a low viscosity, white dispersion. The soy/urea resin from Example 11 was then charged over 5 minutes to the rapidly stirring dispersion and allowed to stir for an additional 5 minutes. The pH was then adjusted using 0.9g of 50% H₂SO₄. The soy/urea/PF dispersion was then allowed to stir for 10 minutes. A stable low viscosity product was observed. The characteristics of this resin are shown along with the shear strength analysis in Table 17.

**Table 17**

| Soy/Urea/PF Dispersion Characteristics and Shear Strength Analysis (ABES/Instron) | | | | | | | | | |
|---|---|---|---|---|---|---|---|---|---|
| | | | | | | **Viscosity** | | | |
| Example | Desc. | Copoly | % S/U | Theor. Solids | pH F | LVT @ 60 RPM | LVT @ 30 RPM | Dry Strength (PSI) | Wet Strength (PSI) |
| C2 | PVA-LS | PVA | 0 | 45.8 | | 320 | 328 | 640 (134) | 32 (5) |
| 11 | 2A90-1-0 | None | 100 | 30.0 | 7.77 | 2590 | 3600 | 283 (33) | 29 (18) |
| 28 | 2A90-1-48PF | PF | 52 | 37.3 | 7.43 | 145 | 150 | 447 (45) | 151 (26) |
| 28-150 C | 2A90-1-48PF | PF | 52 | 37.3 | 7.4 | 145 | 150 | 622 (122) | 454 (9) |

| | | | | | | | | | |
|---|---|---|---|---|---|---|---|---|---|
| ( ) denotes standard deviation | | | | | | | | | |

Discussion (Evaluation Method- ABES/Instron): The wet strength of the soy/urea resin is greatly improved by adding the dispersion PF resin that also serves as a viable cross-linker. The resin is light in color, low in viscosity, and void of the thixotropic nature typically observed in soy resins. The results in FIG. 22 clearly show the excellent wet strength obtained for such a high soy modified product, especially at the higher 150°C press temperature. This example demonstrates that it is possible and practical to combine the soy/urea with a PF dispersion and achieve a high level of water resistance.

## Claims

1. A method for making a stable adhesive, the method comprising:
(a) denaturing soy flour, wherein the soy flour is denatured by heating the soy flour in an aqueous solution to a temperature of 40°C- 100°C for a period of at least 15 to 500 minutes until denatured and free of urease;
(b) adding urea to the denatured soy flour, wherein a stable, soy/urea adhesive is formed;
(c) adding a crosslinking agent to the soy/urea adhesive;
wherein the urea is added to the soy flour in an amount equivalent to at most five parts urea for every one part soy flour; and
wherein the denatured soy flour is not an alkaline-denatured soy flour.

2. The method of claim 1 wherein the urea is added to the denatured soy flour while the flour is at 40°C -100°C.

3. The method of any one of the preceding claims wherein the soy flour contains at least 20% carbohydrate by weight.

4. The method of claim of any one of the preceding claims wherein the cross- linking agent is added in an amount between 0.1 and 80 percent by weight and is
a) a formaldehyde-free cross-linking agent selected from isocyanate, polyamine epichlorohydrin resin, epoxy, aldehyde, aldehyde starch, urea- aldehyde resin and mixtures thereof;
b) polymeric methyl diphenyl diisocyanate;
c) polyamidoamine-epichlorohydrin resin, polyalkylenepolyamine-epichlorohydrin or amine polymer-epichlorohydrin resin;
d) dialdehyde starch, glyoxal, or urea glyoxal; or
e) the cross-linking agent is a formaldehyde-containing cross-linking agent selected from formaldehyde, phenol formaldehyde, urea formaldehyde, melamine urea formaldehyde, phenol resorcinol and any combination thereof.

5. The method of any one of the preceding claims further comprising drying the soy flour-based adhesive to produce a powder adhesive.

6. The method of any one of the preceding claims further comprising adding a diluent to the soy flour-based adhesive.

7. The method of claim 6 wherein the diluent is selected from glycerol, ethylene glycol, propylene glycol, neopentyl glycol and polymeric versions thereof, and is preferably glycerol.

8. A method for making a stable soy/urea dispersion, the method comprising:
a) heating an aqueous solution of soy flour to a temperature of 40°C- 100°C until denatured and free of urease;
b) adding urea to the denatured soy flour to form a soy flour-based adhesive; and
c) adding a polymer to the soy flour-based adhesive, wherein a stable soy/urea dispersion is formed,
wherein the urea is added to the soy flour in an amount equivalent to or at most five parts and at least 0.25 parts urea for every one part soy flour, and
wherein the denatured soy flour is not an alkaline-denatured soy flour..

9. The method of claim 8 wherein the soy flour is denatured by heating for at least 15 to 500 minutes.

10. The method of claim 8 wherein
a) the polymer is an emulsified or dispersed polymer;
b) the soy flour contains at least 20% carbohydrate by weight;
c) the polymer is selected from polyvinyl acetate or phenol formaldehyde dispersions; or
d) comprising adding a cross-linking agent to the soy/urea dispersion.

11. The method of claim 8 which further comprises adding a cross-linking agent to the soy/urea dispersion in an amount between 0.1 and 80 percent by weight, and wherein the cross-linking agent
a) a formaldehyde-free cross-linking agent selected from polymeric methyl diphenyl diisocyanate, polyamine epichlorohydrin, epoxy and glyoxal; or
b) is a formaldehyde-containing crosslinking agent selected from formaldehyde, phenol formaldehyde, urea formaldehyde, melamine urea formaldehyde, phenol resorcinol and any combination thereof.

12. The method of claim 8 further comprising drying the soy/urea dispersion to form a powdered soy/urea dispersion.

13. The method of claim 11 which comprises drying the soy/urea dispersion by freeze-drying or spray drying.

## Patentansprüche

1. Verfahren zur Herstellung eines stabilen Klebstoffs, wobei das Verfahren umfaßt:
(a) Denaturieren von Sojamehl, wobei das Sojamehl denaturiert wird, indem das Sojamehl in einer wäßrigen Lösung auf eine Temperatur von 40 °C - 100 °C für einen Zeitraum von mindestens 15 bis 500 Minuten erhitzt wird, bis es denaturiert und frei von Urease ist;
(b) Zugabe von Harnstoff zu dem denaturierten Sojamehl, wobei ein stabiler Soja/Harnstoff-Klebstoff gebildet wird;
(c) Zugabe eines Vernetzungsmittels zu dem Soja/Harnstoff-Klebstoff;
wobei der Harnstoff zu dem Sojamehl in einer Menge zugegeben wird, die höchstens fünf Teilen Harnstoff pro einem Teil Sojamehl entspricht; und
wobei das denaturierte Sojamehl kein alkalisch denaturiertes Sojamehl ist.

2. Verfahren gemäß Anspruch 1, wobei der Harnstoff dem denaturierten Sojamehl zugesetzt wird, während das Mehl bei 40°C - 100°C ist.

3. Verfahren gemäß einem der vorstehenden Ansprüche, wobei das Sojamehl mindestens 20 Gew.-% Kohlenhydrate enthält.

4. Verfahren gemäß einem der vorstehenden Ansprüche, wobei das Vernetzungsmittel in einer Menge zwischen 0,1 und 80 Gew.-% zugegeben wird und
a) ein formaldehydfreies Vernetzungsmittel, ausgewählt aus Isocyanat, Polyamin-Epichlorhydrinharz, Epoxy, Aldehyd, Aldehydstärke, Harnstoff-Aldehydharz und Mischungen davon ist;
b) polymeres Methyldiphenyldiisocyanat ist;
c) Polyamidoamin-Epichlorhydrin-Harz, Polyalkylenpolyamin-Epichlorhydrin- oder Aminpolymer-Epichlorhydrin-Harz ist;
d) Dialdehydstärke, Glyoxal oder Harnstoffglyoxal ist; oder
e) das Vernetzungsmittel ein formaldehydhaltiges Vernetzungsmittel, ausgewählt aus Formaldehyd, Phenolformaldehyd, Harnstoffformaldehyd, Melaminharnstoffformaldehyd, Phenolresorcin und jeder Kombination davon ist.

5. Verfahren gemäß einem der vorstehenden Ansprüche, das weiterhin das Trocknen des Klebstoffs auf Sojamehlbasis zur Herstellung eines Pulverklebstoffs umfaßt.

6. Verfahren gemäß einem der vorstehenden Ansprüche, dass weiterhin die Zugabe eines Verdünnungsmittels zu dem Klebstoff auf Sojamehlbasis umfasst.

7. Verfahren gemäß Anspruch 6, wobei das Verdünnungsmittel aus Glycerin, Ethylenglykol, Propylenglykol, Neopentylglykol und polymeren Versionen davon ausgewählt ist und vorzugsweise Glycerin ist.

8. Verfahren zur Herstellung einer stabilen Soja/Harnstoff-Dispersion, wobei das Verfahren umfaßt:
a) Erhitzen einer wäßrigen Lösung von Sojamehl auf eine Temperatur von 40 °C -100 °C, bis sie denaturiert und frei von Urease ist;
b) Zugabe von Harnstoff zu dem denaturierten Sojamehl, um einen Klebstoff auf Sojamehlbasis zu bilden; und
c) Zugabe eines Polymers zu dem Klebstoff auf Sojamehlbasis, wobei eine stabile Soja/Harnstoff-Dispersion gebildet wird,
wobei der Harnstoff dem Sojamehl in einer Menge von gleich oder höchstens fünf Teilen zugesetzt wird und
mindestens 0,25 Teile Harnstoff auf je ein Teil Sojamehl, und
wobei das denaturierte Sojamehl kein alkalisch denaturiertes Sojamehl ist.

9. Verfahren gemäß Anspruch 8, wobei das Sojamehl durch Erhitzen für mindestens 15 bis 500 Minuten denaturiert wird.

10. Verfahren gemäß Anspruch 8, wobei
a) das Polymer ist ein emulgiertes oder dispergiertes Polymer ist;
b) das Sojamehl mindestens 20 Gew.-% Kohlenhydrate enthält;
c) das Polymer aus Polyvinylacetat- oder Phenolformaldehyddispersionen ausgewählt ist; oder
d) die Zugabe eines Vernetzungsmittels zu der Soja/Harnstoff-Dispersion umfasst.

11. Verfahren gemäß Anspruch 8, welches weiterhin die Zugabe eines Vernetzungsmittels zu der Soja/Harnstoff-Dispersion in einer Menge zwischen 0,1 und 80 Gew.-% umfasst, und wobei das Vernetzungsmittel
a) ein formaldehydfreies Vernetzungsmittel, ausgewählt aus polymerem Methyldiphenyldiisocyanat, Polyamin-Epichlorhydrin, Epoxy und Glyoxal ist; oder
b) ist ein formaldehydhaltiges Vernetzungsmittel, ausgewählt aus Formaldehyd, Phenolformaldehyd, Harnstoffformaldehyd, Melaminharnstoffformaldehyd, Phenolresorcin und jeder Kombination davon ist.

12. Verfahren gemäß Anspruch 8, weiterhin umfassend das Trocknen der Soja/Harnstoff-Dispersion zur Bildung einer pulverförmigen Soja/Harnstoff-Dispersion.

13. Verfahren gemäß Anspruch 11, umfassend das Trocknen der Soja/Harnstoff-Dispersion durch Gefriertrocknen oder Sprühtrocknen.

## Revendications

1. Procédé de fabrication d'un adhésif stable, le procédé comprenant les opérations suivantes:
(a) dénaturer la farine de soja, la farine de soja étant dénaturée en chauffant la farine de soja dans une solution aqueuse à une température de 40 ° C à 100 ° C pendant une période d'au moins 15 à 500 minutes jusqu'à dénaturation et sans uréase;
(b) ajouter de l'urée à la farine de soja dénaturée, dans lequel un adhésif soja / urée stable est formé;
(c) ajouter un agent de réticulation à l'adhésif de soja / urée;
dans lequel l'urée est ajoutée à la farine de soja en une quantité équivalente à au plus cinq parties d'urée pour chaque partie de farine de soja; et
dans lequel la farine de soja dénaturée n'est pas une farine de soja dénaturée alcaline.

2. Procédé selon la revendication 1, dans lequel l'urée est ajoutée à la farine de soja dénaturée tandis que la farine est à 40 ° C -100 ° C.

3. Procédé selon l'une quelconque des revendications précédentes, dans lequel la farine de soja contient au moins 20% de glucides en poids.

4. Procédé selon l'une quelconque des revendications précédentes, dans lequel l'agent de réticulation est ajouté en une quantité comprise entre 0,1 et 80 pour cent en poids et est
a) un agent de réticulation sans formaldéhyde choisi parmi l'isocyanate, la résine de polyamine épichlorhydrine, l'époxy, l'aldéhyde, l'amidon aldéhyde, la résine urée-aldéhyde et leurs mélanges;
b) le diisocyanate de méthyle diphényle polymère;
c) résine polyamidoamine-épichlorhydrine, polyalkylènepolyamine-épichlorhydrine ou résine polymère amine-épichlorhydrine;
d) l'amidon de dialdéhyde, le glyoxal ou l'urée glyoxal; ou
e) l'agent de réticulation est un agent de réticulation contenant du formaldéhyde choisi parmi le formaldéhyde, le phénol formaldéhyde, l'urée formaldéhyde, la mélamine urée formaldéhyde, le phénol résorcinol et toute combinaison de ceux-ci.

5. Procédé selon l'une quelconque des revendications précédentes, comprenant en outre le séchage de l'adhésif à base de farine de soja pour produire un adhésif en poudre.

6. Procédé selon l'une quelconque des revendications précédentes, comprenant en outre l'ajout d'un diluant à l'adhésif à base de farine de soja.

7. Procédé selon la revendication 6, dans lequel le diluant est choisi parmi le glycérol, l'éthylène glycol, le propylène glycol, le néopentyl glycol et leurs versions polymériques, et est de préférence le glycérol.

8. Procédé de préparation d'une dispersion soja / urée stable, le procédé comprenant:
a) chauffer une solution aqueuse de farine de soja à une température de 40 ° C à 100 ° C jusqu'à ce qu'elle soit dénaturée et exempte d'uréase;
b) ajouter de l'urée à la farine de soja dénaturée pour former un adhésif à base de farine de soja; et
c) ajouter un polymère à l'adhésif à base de farine de soja, dans lequel une dispersion soja / urée stable est formée,
dans lequel l'urée est ajoutée à la farine de soja en une quantité équivalente à ou au plus cinq parties et
au moins 0,25 partie d'urée pour chaque partie de farine de soja, et
dans lequel la farine de soja dénaturée n'est pas une farine de soja dénaturée alcaline.

9. Procédé selon la revendication 8, dans lequel la farine de soja est dénaturée par chauffage pendant au moins 15 à 500 minutes.

10. Procédé selon la revendication 8, dans lequel
a) le polymère est un polymère émulsionné ou dispersé;
b) la farine de soja contient au moins 20% de glucides en poids;
c) le polymère est choisi parmi les dispersions d'acétate de polyvinyle ou de phénol formaldéhyde; ou
d) comprenant l'ajout d'un agent de réticulation à la dispersion soja / urée.

11. Procédé selon la revendication 8, qui comprend en outre l'addition d'un agent de réticulation à la dispersion de soja / urée en une quantité comprise entre 0,1 et 80 pour cent en poids, et dans lequel l'agent de réticulation
a) un agent de réticulation sans formaldéhyde choisi parmi le diisocyanate de méthyle diphényle polymère, la polyamine épichlorhydrine, l'époxy et le glyoxal; ou
b) est un agent de réticulation contenant du formaldéhyde choisi parmi le formaldéhyde, le phénol formaldéhyde, l'urée formaldéhyde, la mélamine urée formaldéhyde, le phénol résorcinol et toute combinaison de ceux-ci.

12. Procédé selon la revendication 8, comprenant en outre le séchage de la dispersion soja / urée pour former une dispersion soja / urée en poudre.

13. Procédé selon la revendication 11, qui comprend le séchage de la dispersion de soja / urée par lyophilisation ou séchage par atomisation.
